# EUROPEAN PATENT SPECIFICATION

(11) **EP 1 900 404 B1**
(45) Date of publication and mention of the grant of the patent: **16.05.2018**
(21) Application number: 07116348.9
(22) Date of filing: 13.09.2007
(51) Int. Cl.: A63F 13/00

(54) **Game controller and charging cradle**
Spielsteuerung und Ladestation
Contrôleur de jeu et station d'accueil de chargement

(30) Priority: 13.09.2006 JP 2006248101
(43) Date of publication of application: 19.03.2008
(73) Proprietor: BANDAI NAMCO Entertainment Inc., Minato-ku Tokyo 108-0014 (JP)
(72) Inventor: Satsukawa, Takashi, Shinagawa-ku Tokyo 140-8590 (JP); Shimuzu, Takehiro, Shinagawa-ku Tokyo 140-8590 (JP); Saito, Shigemasa, Shinagawa-ku Tokyo 140-8590 (JP); Kuroda, Masanao, Shinagawa-ku Tokyo 140-8590 (JP)
(74) Representative: Page Hargrave

(56) References cited:
- EP-A- 0 969 405
- EP-A- 1 002 559
- EP-A- 1 293 238

## Description

### BACKGROUND OF THE INVENTION

The present invention relates to a game controller which outputs an operation input signal to a game device main body according to a player's operation input and the like.

In recent years, consumer game devices such as Playstation (registered trademark), GameCube (registered trademark), and XBox (registered trademark) have become remarkably popular. These consumer game devices are generally sold as a set of a game device main body, which includes a reader which reads a game program from an optical medium such as a CD-ROM or a DVD-ROM and a control unit which performs calculations necessary for game play, and a game controller as an accessory.

The game controller is designed to be universal and achieve excellent operability so that the player can play various types of games instead of aiming at a specific game type. The game controller generally has holding sections on right and left ends, and includes input devices such as a direction input arrow key provided on the left upper surface and a push button provided on the right upper surface. The player holds the right and left holding sections with both hands in the same manner as in the case of holding a steering wheel, and inputs a game operation.

As one type of consumer game device, a toy is known which has an outward appearance similar to that of a gun such as a grip, a trigger, and a muzzle, and includes a microphone provided in the muzzle and a display which displays a game screen (e.g. Japanese Utility Model Registration No. 3046095). When the player holds the toy in the same manner as in the case of holding a gun and pulls the trigger while aiming the muzzle at a sound source, sound from the sound source is collected by the microphone, and an image of a monster is displayed on the display depending on the collected sound. The player can enjoy a game in which the player aims at the monster by operating the arrow key provided near the grip and pulls the trigger at an appropriate timing to capture the monster which lurks in the sound source. Since the toy has an outward appearance and an operation system imitating a gun, the player can enjoy playing the game just like hunting with a gun.

In recent years, a first-person shooter (FPS) game has been known as one type of video game. The FPS game refers to one type of first-person shooter game in which a player shoots an enemy character using a weapon such as a gun while watching a game screen on which a game world is displayed which is viewed from the view point (first-person view point) of a player's character operated by the player.

The FPS game was initially developed for a personal computer. Since many users have strongly demanded the capability of playing the FPS game using a consumer game device, an FPS game has been developed for some consumer game devices.

In the FPS game, the player is put in a situation in which the enemy may attack at any time, as if the player were in the front line in a battlefield. Therefore, in order to fully enjoy playing the FPS game, a game controller is required which allows the player to perform an intuitive and smooth operation input. However, the controller of the consumer game machine is designed to be universally used for various games, as described above. Therefore, it is difficult for the player to intuitively input the moving direction and the view point direction (i.e. line-of-sight direction) of the player's character which is an important operation input for the FPS game. Specifically, most game controllers provided to known consumer game devices are designed to have direction input devices on the right and left and to be held by both hands. Therefore, when one of the right and left direction input devices is assigned to input the moving direction and the other assigned to input the view point direction, the input devices for the moving direction and the view point direction are provided side by side on the right and left. The player can aim by inputting the moving direction and the view point direction with both hands. However, the player must perform a firing operation input in addition to these operation inputs. Specifically, the positional relationship between the direction the player imagines and the operation system of the controller actually held with the hands is important, and a prompt and intuitive operation input is desired.

### SUMMARY

According to one aspect of the invention, there is provided a game controller that has a specific shape held with both hands during use, the game controller comprising: a front-side holding section and a rear-side holding section respectively provided on a front side and a rear side of the game controller, the front-side holding section being held with a right or left hand and the rear-side holding section being held with the other hand; a front-side direction input section that is provided within a range in which the thumb of the hand holding the front-side holding section reaches the front-side direction input section, and is operated with the thumb of the hand holding the front-side holding section in a vertical direction and a horizontal direction; a rear-side direction input section that is provided within a range in which the thumb of the hand holding the rear-side holding section reaches the rear-side direction input section, and is operated with the thumb of the hand holding the rear-side holding section in a vertical direction and a horizontal direction; and an operation signal output section that outputs an operation input signal corresponding to an input to each of the front-side direction input section and the rear-side direction input section.

### BRIEF DESCRIPTION OF THE SEVERAL VIEWS OF THE DRAWING

FIG. 1 is a system configuration diagram showing a configuration example of a game system according to a first embodiment.
FIG. 2 is a schematic view illustrative of a pointer function of a gun-type controller according to the first embodiment.
FIGS. 3A to 3C are external views illustrative of the configuration of the gun-type controller according to the first embodiment.
FIGS. 4A and 4B are views showing the relationship between an operation input of the gun-type controller and control of a player's character according to the first embodiment.
FIG. 5 is an external oblique view illustrative of the configuration of a gun-type controller according to a second embodiment.
FIG. 6 is a partial oblique view showing a portion around a subgrip of the gun-type controller according to the second embodiment.
FIG. 7 is an external left side view showing an example of the configuration of a gun-type controller according to a third embodiment.
FIGS. 8A to 8C are configuration diagrams showing the configuration of a subgrip Assy according to the third embodiment.
FIG. 9 is a configuration diagram illustrative of the configuration of a barrel according to the third embodiment.
FIGS. 10A and 10B are perspective front views showing a state in which the installation angle of the subgrip according to the third embodiment is changed.
FIG. 11 is an external left side view showing an example of the configuration of a gun-type controller according to a fourth embodiment.
FIG. 12 is a partial cross-sectional view showing an example of the configuration of the gun-type controller according to the fourth embodiment.
FIGS. 13A to 13B are external views showing an example of the configuration of a gun-type controller according to a fifth embodiment.
FIGS. 14A to 14E are views showing the configuration of a grip stay according to the fifth embodiment.
FIG. 15 is a front partial cross-sectional view showing the installation structure around the grip stay according to the fifth embodiment
FIGS. 16A to 16D are views showing the procedure of changing the gun-type controller according to the fifth embodiment from a right-handed gun-type controller to a left-handed gun-type controller.
FIG. 17 is a rear oblique view showing a state in which the gun-type controller according the fifth embodiment is held.
FIGS. 18A and 18B are external views showing an example of the configuration of a gun-type controller according a sixth embodiment.
FIG. 19 is a front exploded view showing an example of the configuration of the gun-type controller according the sixth embodiment.
FIGS. 20A and 20B are external left side views showing an example of the configuration of a gun-type controller according a seventh embodiment.
FIGS. 21A and 21B are external views showing an installation example of a subgrip and the like according the seventh embodiment.
FIGS. 22A to 22C are external left side view showing an example of the configuration of a gun-type controller according an eighth embodiment.
FIGS. 23A and 23B are external side views showing an example of the configuration of a sword-type game controller according a ninth embodiment.
FIG. 24 is an external left side view showing an example of the configuration of a cradle.
FIGS. 25A and 25B are views showing a modification of the installation form of a subgrip and a modification of the installation form of a sublever.

### DETAILED DESCRIPTION OF THE EMBODIMENT

The invention may provide a game controller which allows the player to more intuitively and smoothly play a game which requires that the player input the view point direction and the moving direction of the player's character such as an FPS game.

According one embodiment of the invention, there is provided a game controller which has a specific shape held with both hands during use, the game controller comprising:
a front-side holding section and a rear-side holding section respectively provided on a front side and a rear side of the game controller, the front-side holding section being held with a right or left hand and the rear-side holding section being held with the other hand;
a front-side direction input section operated by a finger of the hand holding the front-side holding section;
a rear-side direction input section operated by a finger of the hand holding the rear holding section; and
an operation signal output section which outputs an operation input signal corresponding to an input to each of the front-side direction input section and the rear-side direction input section.

According to this configuration, the game controller is used in a state in which the player aims the game controller in the forward/backward direction by holding the front-side holding section with one hand and the rear-side holding section with the other. The front-side direction input section and the rear-side direction input section are provided at positions reached by the fingers when holding the front-side holding section and the rear-side holding section, and the operation input signals corresponding to the inputs to the front-side direction input section and the rear-side direction input section are output from the game controller.

Specifically, the player holds the game controller just like a weapon aiming the game controller in the forward/backward direction, for example. Since the sense of distance in the game world coincides with the sense of distance in the real world experienced by the player when holding the game controller, the player can enjoy the game as if the player were the character. Therefore, the player can perform a significantly more intuitive operation input as compared with a universal game controller provided to a consumer game device by providing the direction input means near the front-side holding section and the rear-side holding section, irrespective of whether the direction input means are assigned to the moving direction operation input or the view point direction operation input. Moreover, since the two direction input devices are provided on the front side and the rear side, an advanced operation which cannot be achieved by a toy or a game controller merely having a gun-type external shape and provided with only an arrow key when the player plays an FPS game in which the moving direction and the line-of-sight direction must be input, whereby the player can enjoy a more realistic virtual experience.

In the game controller according to this embodiment,
the front-side direction input section may be provided within a range in which the thumb of the hand holding the front-side holding section reaches the front-side direction input section; and
the rear-side direction input section may be provided within a range in which the thumb of the hand holding the rear-side holding section reaches the rear-side direction input section.

According to this configuration, convenience to the player can be improved by applying a usual method of inputting the direction with the thumb. Specifically, even if the game controller has an original shape, the player need not master the operation input such as the moving direction and the view point direction of the player's character as long as the player has experience in using a related-art game controller. This achieves an intuitive input even when the player plays a game in which the player becomes tense during the game thus losing his/her temper, such as in an FPS game.

In the game controller according to this embodiment, an upward/downward operation direction of the front-side direction input section may be defined as a bending/stretching direction of the thumb when holding the front-side holding section.

According to this configuration, the player can perform a more intuitive and smoother operation input by setting the upward/downward operation direction of the front-side direction input section to be the bending/stretching direction of the thumb. The term "upward/downward direction" used herein refers to one of the directions which can be input using the direction input device, and may be referred to as a forward/backward direction depending on the arrangement condition of the front-side direction input section.

The game controller according to this embodiment may comprise a push button provided within a range in which the forefinger of the hand holding the front-side holding section reaches the push button.

According to this configuration, the player can perform a more intuitive and smoother operation input by providing another input device at a position reached by the forefinger of the hand holding the front-side holding section. Moreover, the operation of holding the holding section and the operation for the input device can be unified by using a push button as the input device, whereby the player can perform an intuitive and smooth operation without being upset even when playing an FPS game in which the player continuously becomes tense during the game.

In the game controller according to this embodiment,
a depression which may be depressed as compared with an end face is provided in the front-side holding section at an arrangement position of the push button; and
the push button may be disposed in the depression.

When playing an FPS game, the player becomes tense as if the player were in a battlefield. Therefore, the player strongly holds the front-side holding section. When the key top of the push button protrudes from the end face of the front-side holding section, the player may erroneously presses the push button due to tension. According to this embodiment, since the key top of the push button can be provided at a position depressed as compared with the end face of the front-side holding section, an erroneous operation can be prevented. On the other hand, the player can promptly identify the position of the push button by touching the contour of the depression. Therefore, a game controller can be provided which is more suitable for playing an FPS game.

In the game controller according to this embodiment, the front-side direction input section may be an operation input section which includes a tiltable stick or a slidable pad and of which an operation direction and an amount of operation is variably input, and may be disposed at a position close to the hand holding the front-side holding section with respect to a center of a main body in a right/left direction.

According to this configuration, the operation direction and the amount of operation can be variably input by one action such as tilting the stick or slidingly moving the finger pad. Moreover, since the front-side direction input section is disposed at a position close to the hand holding the front-side holding section with respect to the center of the main body in the right/left direction, the thumb can easily reach the front-side direction input section when holding the front-side holding section. Therefore, the player can perform a more intuitive and smoother operation input.

In the game controller according to this embodiment, the front-side direction input section may be an operation input section which includes a tiltable stick or a slidable pad and of which an operation direction and an amount of operation is variably input, and is freely disposed at a position close to the left or right with respect to a center of a main body in a right/left direction.

According to this configuration, the operation direction and the amount of operation can be variably input by one action such as tilting the stick or slidingly moving the finger pad. Moreover, the stick or the pad can be freely disposed at a position close to the left or right with respect to the center of the main body in the right/left direction. The position at which the thumb is placed when holding the front-side holding section differs depending on the dominant arm and the size of the player's hand. This can be adjusted to an appropriate position. Therefore, the player can perform a more intuitive and smoother operation input.

In the game controller according to this embodiment, the front-side direction input section may be include a tiltable stick which is maintained at a specific neutral position in a non-input state, the stick being tilted toward the hand holding the front-side holding section at the neutral position.

According to this configuration, the stick in a non-input state can be tilted toward the position at which the thumb is placed when holding the front-side holding section. Specifically, the player can evenly operate the stick in upward, downward, right, and left directions from a state in which the thumb is placed. Therefore, the player can perform a more intuitive and smoother operation input.

In the game controller according to this embodiment, the front-side direction input section can be detached from the front-side holding section and attached to the front-side holding section in a right/left reversed state.

According to this configuration, a state in which the front-side direction input section is disposed at a position close to the hand holding the front-side holding section with respect to the center of the main body in the right/left direction can be arbitrarily changed to the right or left.

The game controller according to this embodiment may comprise:
a detection section which detects a right/left reversed installation state of the front-side direction input section;
wherein the operation signal output section may correct signals of the front-side direction input section in upward, downward, right, and left directions according to the detection result of the detection section and may output the corrected signals.

According to this configuration, the detection section can detect right/left inversion of the front-side direction input section, and the operation signal output section can correct the signals of the front-side direction input section in upward, downward, right, and left directions and output the corrected signals. This makes it unnecessary to change the installation of the signal lines connected with the front-side direction input section each time the front-side direction input section is reversed, whereby even a child can easily perform the switching operation.

In the game controller according to this embodiment, the game controller may have a firearm shape and may further comprise:
a barrel equivalent portion; and
a firing trigger provided within a range in which the forefinger of the hand holding the rear-side holding section reaches the firing trigger;
the rear-side holding section may be a main grip; and
the front-side holding section may be a subgrip.

According to this configuration, the game controller has an outward appearance and an operation system similar to those of an actual automatic rifle. Therefore, a realistic game play becomes possible by playing an FPS game using this game controller. The game controller contributes to allowing the sense of direction in the game world to coincide with the sense of direction in the real world, thereby prompting an intuitive input.

The game controller according to this embodiment may comprise:
a trigger guard for the firing trigger;
the front-side direction input section may include a tiltable stick provided between the front-side holding section and the trigger guard; and
a space into which a thumb can be inserted may be provided between an operation surface of the stick and the trigger guard.

According to this configuration, the size of the game controller is reduced so that a child can easily handle the game controller, and a situation can be prevented in which the thumb operating the front-side direction input section interferes, even if an adult uses the game controller.

In the game controller according to this embodiment,
the front-side holding section may be provided so that a longitudinal direction of the front-side holding section faces diagonally forward; and
the front-side holding section may include a push button provided at a position of the forefinger holding the front-side holding section so that a depressing direction coincides with a bending direction of the forefinger in a state in which the forefinger holds the front-side holding section.

According to this configuration, the front-side holding section can be more easily held by providing the front-side holding section so that the longitudinal direction faces diagonally forward. Moreover, the player can perform a smoother operation by providing the push button-type input device so that the depressing direction coincides with the bending direction of the forefinger in a state in which the forefinger holds the front-side holding section.

The game controller according to this embodiment may comprise a variable mechanism section by which an arrangement position of the front-side holding section with respect to the barrel equivalent portion is changeable.

According to this configuration, the arrangement position of the front-side holding section can be changed according to the player's preference. When the front-side holding section is provided at a fixed position, the player is forced to be in a specific position, whereby the player may feel uncomfortable. In this case, the player who feels uncomfortable cannot concentrate on the game, whereby the playability of the game may deteriorate. According to the invention, the player can fully enjoy the game play in a more comfortable position.

In the game controller according to this embodiment,
the variable mechanism section may include:
a swing shaft provided in the barrel equivalent portion;
a swing shaft insertion hole which is provided in the front-side holding section and into which the swing shaft is inserted; and
a securing section which secures the position of the front-side holding section around the swing shaft.

According to this configuration, the variable mechanism can be realized using a simple structure in which the front-side holding section is pivotally supported by the swing shaft and a stop around the shaft is provided. The game controller is also a toy and is required not to break even when a child handles the game controller relatively roughly. Since the variable mechanism section can be realized using a simple structure, the game controller can be easily provided with strength in design and can be manufactured at low cost.

In the game controller according to this embodiment,
the variable mechanism section may include:
a ball head section provided in one of the front-side holding section and the barrel equivalent portion; and
a ball holding section which holds and secures the ball head section and is provided in the other of the front-side holding section and the barrel equivalent portion.

According to this configuration, the front-side holding section can be freely inclined in forward, backward, left, and right directions with respect to the barrel equivalent portion. Since the structure is relatively simple, the strength of the variable mechanism section can be easily secured. Moreover, the game controller can be manufactured at low cost.

In the game controller according to this embodiment, the variable mechanism section may include connection sections which are provided on a peripheral surface of the barrel equivalent portion and to which the front-side holding section can be connected, and the front-side holding section may be connected to one of the connection sections.

According to this configuration, the player can attach the front-side holding section to the connection section at the desired position. Specifically, since the outward appearance according to the player's preference can be realized, the player tends to be attached to the game controller and involved in the game. Moreover, when providing optional parts or accessory parts which can be connected to the connection section in addition to the front-side holding section, outward appearances according to various players' preferences can be arbitrarily created in combination with the front-side holding section.

In the game controller according to this embodiment, the front-side holding section may be provided at a position at which a longitudinal direction of the front-side holding section does not intersect the barrel equivalent portion and is displaced from a barrel direction.

According to this configuration, the front-side holding section is disposed to have a positional relationship in which the front-side holding section is displaced with respect to the barrel equivalent portion. Therefore, when the player holds the game controller aiming at the target, the front-side holding section and the rear-side holding section do not overlap in a straight line. For example, the game controller for a right-handed player is used so that the rear-side holding section is held with the right hand and the front-side holding section is held with the left hand. In this case, the player need not move the left hand to the barrel equivalent portion. Specifically, the player need not move the left hand to the barrel equivalent portion to hold the front-side holding section (i.e., to the position at which the direction from the right hand to the left hand coincides with the barrel direction (aiming direction)), whereby an uncomfortable holding position is avoided. As a result, the player can position the left hand toward the left to hold the gun-type game controller while relatively increasing the distance between arms, whereby the player can more comfortably hold the controller.

In the game controller according to this embodiment,
the rear-side holding section may be provided downward from a bottom of the barrel equivalent portion; and
the front-side holding section may be provided downward from a left side or a right side of the barrel equivalent portion.

A firearm in which the rear-side holding section is provided downward from the bottom of the barrel equivalent portion and the front-side holding section is provided downward from the barrel equivalent portion exhibits excellent holding properties and is easily operated. In this case, the controller can be more easily held by providing the front-side holding section downward from the left side portion or the right side portion of the barrel equivalent portion.

According to this embodiment, when forming the game controller to imitate a firearm, the holding properties can be further improved by the offset arrangement of the front-side holding section in addition to excellent holding properties due to the outward appearance of the gun.

In the game controller according to this embodiment, the front-side direction input section may be provided on an upper surface of the front-side holding section.

According to this configuration, the forward, backward, left, and right directions of the front-side direction input section coincide with the directions in the game world with respect to the forward/backward direction of the barrel equivalent portion. Therefore, the player can more intuitively input the direction to the front-side direction input section. In particular, this configuration is further effective when using the front-side direction input section for inputting the moving direction of a character which moves along a specific surface such as the surface of the earth.

In the game controller according to this embodiment, the front-side holding section may include a vibrator.

A firearm having the holding sections on the front side and the rear side is generally used so that the gun is basically supported using the rear-side holding section and the shooting direction is adjusted using the front-side holding section. Therefore, when providing the vibrator in the front-side holding section and producing vibrations in a state in which the player's character is shot, for example, the reality during the game play can be improved by causing the player to feel that the aim swings due to the effects of the bullet or the like by appropriately hindering the adjustment of the shooting direction.

The game controller according to this embodiment may comprise:
a built-in battery; and
a contactless power receiving section which receives power from outside for charging the built-in battery;
wherein the operation signal output section may output the operation input signal using a wireless communication section driven by the built-in battery.

According to this configuration, since the game controller is not connected via a cable, the player can enjoy the game in various positions without taking signal lines into consideration. Specifically, the player easily feels as if the player were operating the weapon appearing in the game.

According to another embodiment of the invention, there is provided a charging cradle comprising:
a securing section which secures the game controller according to this embodiment; and
a contactless power supply section which supplies power to the contactless power receiving section without contacting the contactless power receiving section.

According to this configuration, the built-in battery can be charged by securing the game controller and supplying power without contacting the game controller.

### <First embodiment>

A first embodiment to which the invention is applied is described below with reference to the drawings. This embodiment illustrates an example in which the player plays a first-person shooter (FPS) game using a gun-type game controller imitating a gun. The term "FPS game" refers to one type of game in which the player shoots an enemy character using a weapon such as a gun while watching a game screen on which a game world is displayed which is viewed from the view point (first-person view point) of a player's character operated by the player.

The appearance of the game controller is not limited to a gun. The appearance of the game controller may be appropriately changed depending on the type of game insofar as the game controller imitates a weapon or a tool used by the player's character during the game. For example, a sword-type game controller may be employed when implementing a fencing game in which the player fights an enemy with a sword. The game to which this embodiment is applied is not limited to the FPS game. This embodiment may also be applied to a game in which the player plays the game while watching a game screen on which a game world is displayed which is viewed from a camera disposed behind the player's character, such as a third-person shooter (TPS) game which belongs to the same genre as the FPS game and differs from the FPS game as to the view point position to some extent.

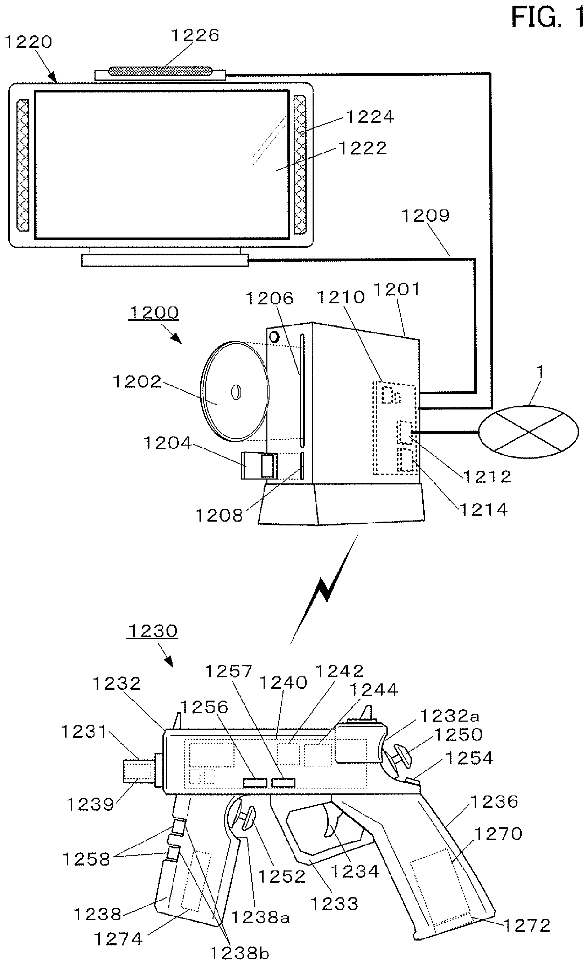

FIG. 1 is a system configuration diagram illustrative of a configuration example of a game system according to this embodiment. A game device main body 1201 of a consumer game device 1200 includes a control unit 1210 provided with a CPU, an image processing LSI, an IC memory, and the like, and readers 1206 and 1208 for information storage media such as an optical disk 1202 and a memory card 1204. The consumer game device 1200 executes a given video game by reading a game program and setting data from the optical disk 1202 and the memory card 1204 and performing game calculations based on an operation input performed using a game controller.

A game image and game sound generated by the control unit 1210 of the consumer game device 1200 are output to a video monitor 1220 connected to the consumer game device 1200 via a signal cable 1209. The player enjoys the game while watching the game image displayed on a display 1222 of the video monitor 1220 and listening to the game sound such as background music (BGM) and effect sound output from a speaker 1224.

The consumer game device 1200 may acquire the game program and setting data necessary for executing the game by connecting with a communication line 1 via a communication device 1212 and downloading the game program and setting data from an external device. The term "communication line" used herein means a communication channel through which data can be exchanged. Specifically, the term "communication line" includes a communication network such as a local area network (LAN) using a private line (private cable) for direct connection, Ethernet (registered trademark), and the like, a telecommunication network, a cable network, and the Internet. The communication method may be a cable communication method or a wireless communication method.

In the game device 1200 according to this embodiment, a gun-type controller 1230 is used as the game controller. The gun-type controller 1230 according to this embodiment is formed to imitate an automatic rifle held with both hands. Specifically, a trigger 1234 surrounded by a trigger guard 1233 is provided under a barrel 1232 having a muzzle 1231 at the front end, and a main grip 1236 extends from the bottom of the rear portion of the barrel positioned adjacent to the trigger 1234. A subgrip 1238 extends from the bottom of the front portion of the barrel 1232 positioned ahead of the trigger guard 1233.

If the player is right-handed, the player holds the main grip 1236 with the right hand with the forefinger placed on the trigger 1234, and holds the subgrip 1238 with the left hand. Specifically, the player adjusts the direction of the muzzle 1231 using the subgrip 1238 while maintaining the basic position using the main grip 1236. The player aims the muzzle 1231 at an enemy character or a target displayed on the game screen, and performs a shooting operation by appropriately pulling the trigger 1234.

The point on the game screen at which the gun-type controller 1230 aims is determined by detecting the relative position of the gun-type controller 1230 and the display 1222.

In this embodiment, the gun-type controller 1230 includes an image sensor 1239 in the opening corresponding to the muzzle 1231. The image sensor 1239 photographs light emitted from specific positions of a light emitter 1226 disposed near the display 1222 (e.g. infrared radiation emitted from both ends), and outputs the photographed image data to a controller control unit 1240.

The controller control unit 1240 includes electronic parts such as an IC chip, an IC memory, a six-axis acceleration sensor 1242, and a short-distance wireless module 1244. The controller control unit 1240 exchanges data with the outside and controls the entire controller. The short-distance wireless module 1244 realizes an ad-hoc short-distance wireless communication with a short-distance wireless module 1214 provided in the control unit 1210 of the game device main body 1201. Therefore, the image data photographed by the image sensor 1239 is transmitted to the game device main body 1201 by the controller control unit 1240 via short-distance wireless communication.

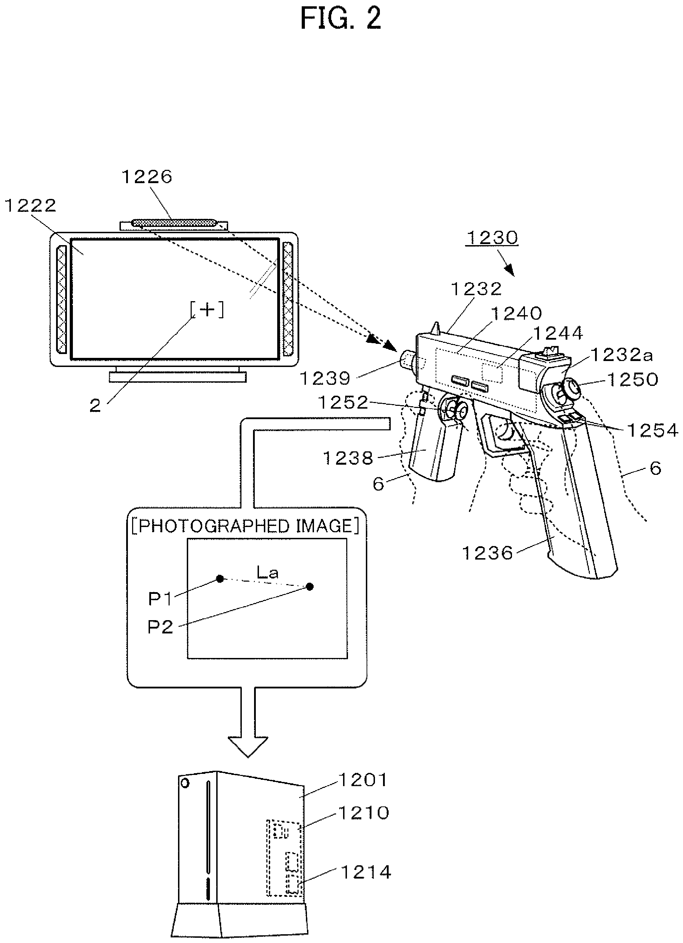

As shown in FIG. 2, the game device main body 1201 geometrically calculates the relative position and the relative posture of the gun-type controller 1230 with respect to the display 1222 from the length and the slope of a line component La which connects light spots P1 and P2 displayed on the photographed image. As a result, the position on the screen at which the gun-type controller 1230 aims is identified, and a pointer 2 is displayed at the position at which the muzzle 1231 aims to assist the player's game play.

The gun-type game controller 1230 according to this embodiment includes a built-in battery 1270 which is charged with electricity supplied from the outside via a contactless power receiving terminal 1272 in the main grip 1236. The gun-type game controller 1230 is provided with necessary electricity from the built-in battery 1270.

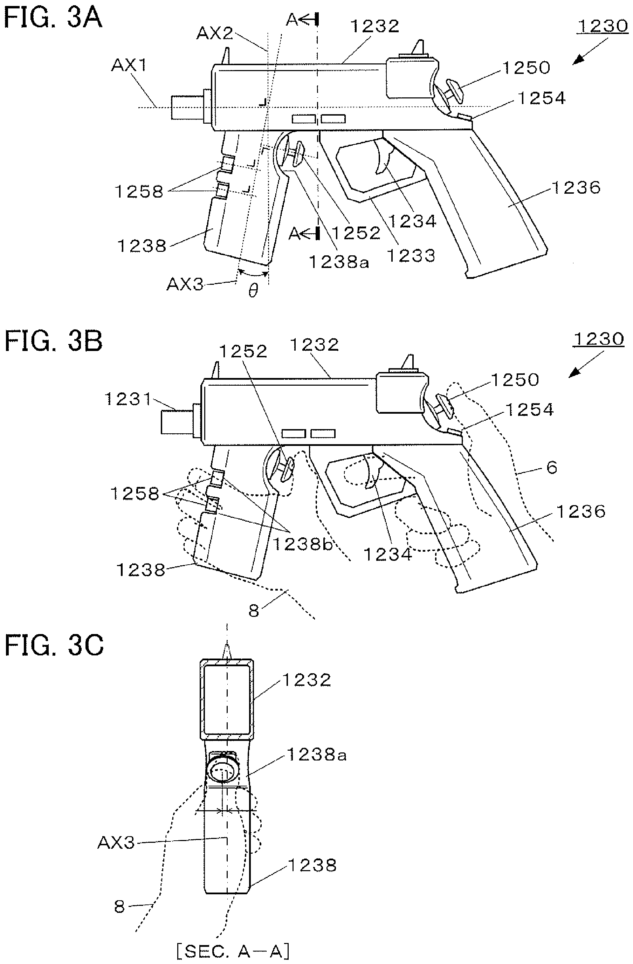

FIG. 3 is an external view illustrative of the configuration of the gun-type controller 1230 according to this embodiment. FIG. 3A is a left side view, FIG. 3B is a left side view showing a held state, and FIG. 3C is a cross-sectional view along the line A-A.

As shown in FIG. 3, the gun-type controller 1230 includes a view point direction lever (main lever) 1250 used to input the view point direction of the player's character and a moving direction lever (sublever) 1252 used to input the moving direction of the player's character in the game space, in addition to the trigger 1234, as input means for the player to perform a necessary operation input when playing the FPS game.

A push-button switch for inputting a switching operation and a specific action of the player's characters is appropriately disposed. In this embodiment, the gun-type controller 1230 includes a rear operation button 1254 disposed near the view point direction lever 1250 and used for a switching operation of a weapon, a bullet, an item, and the like, a start button 1256 and a select button 1257 provided on the side surface of the barrel, and a front operation button 1258 provided on the front surface of the sublever 1238 and used to input a specific action (e.g. squat or jump) of the player's character.

The details of the view point direction lever 1250 and the moving direction lever 1252 are given below. The view point direction lever 1250 and the moving direction lever 1252 are input devices called "analog levers", and have a tiltable stick which allows simultaneous inputs in two axial directions (i.e., vertical direction (upward/downward direction) and horizontal direction (right/left direction)). When the player tilts the stick from the unoperated neutral position with the finger, the amount of tilt (tilt angle) in each of the two axial directions is output from the view point direction lever 1250 and the moving direction lever 1252 by means of an analog signal. The view point direction lever 1250 and the moving direction lever 1252 also function as push switches when the sticks are pressed down.

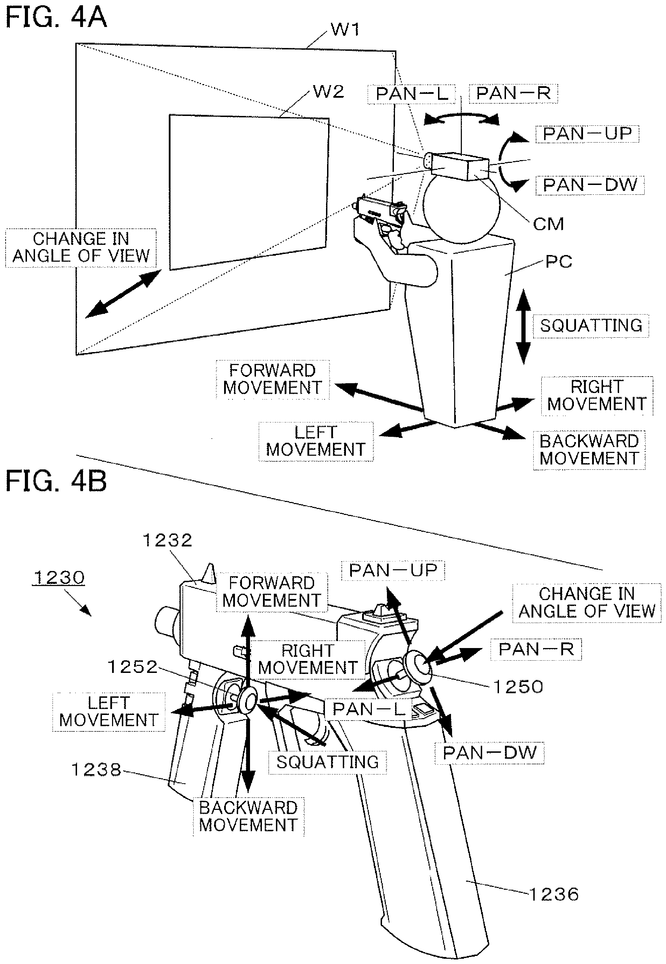

For example, the view point direction lever 1250 and the moving direction lever 1252 are associated with control of the player's character as shown in FIG. 4. FIG. 4A is a view showing an object of a player's character PC obliquely from the left rear, and FIG. 4B is a view showing a state in which the player holds the gun-type controller 1230 aiming at the display 1222, viewed obliquely from the left rear. In this embodiment, the player's character PC is in the shape of a human, and moves on a specific surface such as the ground, a deck, or a floor.

As shown in FIG. 4, the tilt operations of the view point direction lever 1250 in the upward direction and the downward direction are respectively associated with pan-up and pan-down operation inputs for a virtual camera CM disposed as the view point of the player's character PC. The tilt operation in the right direction is associated with pan-right of the virtual camera CM, and the tilt operation in the left direction is associated with pan-left of the virtual camera CM. When the player presses the view point direction lever 1250, the focal length of the virtual camera CM is sequentially changed. As shown in FIG. 4A, the focal length of the virtual camera CM is changed from a photographing range W1 indicating a normal field of view to a photographing range W2 corresponding to telephotographing, and vice versa, each time the player presses the view point direction lever 1250, for example.

The tilt operations of the moving direction lever 1252 in the upward direction and the downward direction are respectively associated with forward and backward operation inputs for the player's character PC in the game space. The tilt operation in the right direction is associated with the right parallel movement of the player's character PC, and the tilt operation in the left direction is associated with the left parallel movement of the player's character PC. When the player presses the moving direction lever 1252, the player's character PC is sequentially changed between the upright position and the squatting position.

Since the view point direction lever 1250 and the moving direction lever 1252 are input devices which allow simultaneous inputs in two axial directions, a diagonal input including the vertical and horizontal components can be performed by one operation input. An arrow key may also be used as the direction input device. However, the player can smoothly and intuitively perform an operation input for causing the player's character PC to diagonally move forward to the right or an operation for causing the player's character PC to diagonally face downward to the left (i.e., causing the field of view to diagonally move downward to the left) by using the analog lever as the input device. Moreover, the direction change speed and the moving speed of the view point can be arbitrarily input by adjusting the change in the amount of input with time.

The player can more promptly perform an intuitive and realistic operation input with high degrees of freedom, as if the player had actually changed the line-of-sight direction and the traveling direction, when the player plays the FPS game in which the player must concentrate all the time by using the analog lever as the direction input device.

Moreover, since the sense of distance of the player's character PC coincides with the sense of distance experienced by the player when the player holds the gun-type controller 1230, the player can intuitively operate the view point direction lever 1250 and the moving direction lever 1252.

Each of the view point direction lever 1250 and the moving direction lever 1252 according to this embodiment includes an elastic member which differs in elasticity between the vertical direction and the horizontal direction in order to realize a specific operation response. The elasticity of the elastic member in the vertical direction is set to be lower than that in the horizontal direction. When the player tilts the stick, the operation response is small in the vertical direction and is large in the horizontal direction. Therefore, the stick is relatively easily operated in the vertical direction, but requires a larger amount of force to some extent when the player operates the stick in the horizontal direction.

Accordingly, the player can relatively easily perform an operation input in the vertical direction, and can feel whether or not the player also performs an operation input in the horizontal direction in addition to the vertical direction from the change in the operation feel. This makes it possible to solve a problem in which it is difficult for an inexperienced player to determine the direction of the operation input, to cause the player's character to face in the desired direction using the view point direction lever 1250, or to cause the player's character to linearly move in the desired direction using the moving direction lever 1252.

The details of the arrangement of each lever are described below with reference to FIGS. 1 and 3.

As shown in FIG. 1, the view point direction lever 1250 is disposed in a first depression 1232a which is depressed forward (direction of the muzzle) and provided at the rear end of the barrel positioned above the root of the main grip 1236, and is installed so that the stick in the neutral position (no input) extends diagonally backward and upward. This position at which the view point lever 1250 is provided corresponds to the position at which the player can operate the view point lever 1250 when the player stretches the thumb while holding the main grip 1236 with the right hand 6 to achieve a positional relationship in which the stick of the view point direction lever 1250 is perpendicular to the ball of the thumb (i.e., almost coincides with the thumb pressing direction). The view point direction lever 1250 is provided to be displaced to the left to some extent from the center of the barrel 1232, and is disposed so that the vertical input direction (vertical tilt direction) coincides with the direction in which the player bends and stretches the thumb while holding the main grip 1236 with the right hand 6.

Therefore, the stick can be accommodated in the first depression 1232a by providing the view point direction lever 1250 in the first depression 1232a so that the end of the stick is positioned near the thumb when the player stretches the thumb while holding the main grip 1236 with the right hand. This allows the player to easily perform an input operation. Moreover, since the vertical input direction (i.e. upward/downward input direction) coincides with the thumb bending/stretching direction, the player can more easily perform the game operation. This allows the player to perform an intuitive and smooth operation input when playing the FPS game in which the player becomes tense. This makes it possible for the player to concentrate on the game and bring the player's ability into full play, whereby the player can fully enjoy the game.

When the player stretches the thumb while holding the main grip 1236 with the right hand, the thumb is naturally displaced to the left from the center of the barrel. Since the view point direction lever 1250 is displaced to the left to some extent from the center of the barrel, the player can more easily operate the stick with the thumb. Moreover, since the view point direction lever 1250 is disposed so that the stick extends diagonally backward and upward in the neutral state, the player can equally operate the view point direction lever 1250 with the thumb in the vertical and horizontal directions.

As described above, the view point direction lever 1250 ensures an excellent operability which is most important for FPS game play by improving the arrangement of the input device, such as allowing the player to arbitrarily change the view point direction by promptly and easily operating the view point direction lever 1250, while concentrating on the operation at the shooting timing, with the forefinger of the right hand 6 placed on the trigger 1234.

On the other hand, the subgrip 1238 extends diagonally forward to some extent from the front lower end of the barrel 1232. Specifically, the subgrip 1238 extends forward by an installation angle θ with respect to a barrel vertical direction axis AX2 along the vertical direction of the barrel 1232.

A second depression 1238a which is depressed forward is provided at the rear of the base where the subgrip 1238 extends from the barrel 1232, and the moving direction lever 1252 is provided in the second depression 1238a so that the stick extends diagonally backward and downward in the neutral position. The position at which the moving direction lever 1252 is provided corresponds to the position at which the player can operate the stick of the moving direction lever 1252 when the player stretches the thumb while holding the subgrip 1238 with the left hand 8 so that the thumb enters the space between the trigger guard 1233 and the subgrip 1238 formed by the second depression 1238a.

As shown in FIG. 3C, the moving direction lever 1252 is provided to be displaced to the left from the center of the barrel 1232, and is disposed so that the upward/downward input direction coincides with the direction in which the player bends and stretches the thumb while holding the subgrip 1238 with the left hand 8.

Therefore, the stick can be accommodated in the second depression 1238a by providing the moving direction lever 1252 in the second depression 1238a so that the end of the stick is positioned near the thumb when the player stretches the thumb while holding the subgrip 1238 with the left hand 8. This allows the player to easily perform an input operation. Moreover, since the vertical input direction (vertical tilt direction) coincides with the thumb bending/stretching direction, the player can more easily perform the game operation. When the player stretches the thumb while holding the subgrip 1238 with the left hand 8, the thumb is naturally displaced to the left from the center of the barrel. Since the moving direction lever 1252 is displaced to the left to some extent from the center of the barrel, the player can more easily operate the stick with the thumb.

As described above, the moving direction lever 1252 allows the player to arbitrarily change the moving direction of the player's character by promptly and easily operating the moving direction lever 1252 while concentrating on the delicate operation of holding the subgrip 1238 with the left hand 8 and aiming the muzzle 1231 at the target on the screen due to improvement in the arrangement of the input device.

Moreover, the view point direction lever 1250 exerts the same effects as the moving direction lever 1252.

Therefore, the player can hold the gun-type controller 1230 as if the player were the player's character and the gun-type controller 1230 were the actual gun, and can smoothly perform an operation input such as sequentially attacking enemies which have come into sight (enemies displayed on the screen) while moving the player's character and changing the view point, for example. The player can be easily absorbed in the game by providing an intuitive and excellent operability which is most important for FPS game play.

The operation buttons are described below with reference to FIGS. 1 to 3.

The rear operation button 1254 is provided in the first depression 1232a. Specifically, the rear operation button 1254 is provided under the view point direction lever 1250 or respectively provided on each side of the view point direction lever 1250. The rear operation button 1254 is associated with the type of bullet fired during the game or the type of firearm (e.g. automatic rifle, rifle, or pistol). The type of bullet or the type of firearm is sequentially changed each time the player presses the right or left rear operation button 1254.

The front operation button 1258 is provided on the front surface of the subgrip 1238. Specifically, a third depression 1238b which is depressed backward is provided in the front surface of the subgrip 1238 at a position reached by the player's forefinger when the player holds the subgrip 1238 with the left hand 8. The front operation button 1238 is provided in the third depression 1238. The front operation button 1238 is a push-button switch. The front operation button 1238 is disposed so that the front operation button 1238 is pressed backward almost perpendicularly to an extension direction AX3 of the subgrip 1238. The front operation button 1258 is disposed so that the front surface of the front operation button 1258 is accommodated in the third depression 1238b and does not protrude from the front surface of the subgrip 1238 in a neutral state.

A player who plays the FPS game tends to tightly hold the subgrip 1238 due to high tension. According to this embodiment, since the front surface of the front operation button 1258 is accommodated in the third depression 1238b, the player is prevented from erroneously pressing the front operation button 1258 even if the player holds the subgrip 1238 with the left hand 8. On the other hand, since the player can identify the position of the front operation button 1258 due to the third depression 1238b, the player can smoothly operate the front operation button 1258 at the desired timing.

In this embodiment, a vibrator 1274 is provided in the subgrip 1238. The vibrator 1274 vibrates based on a vibration control signal generated by the controller control unit 1240 based on a control signal received from the game device main body 1201. For example, the vibrator 1274 vibrates in an appropriate vibration pattern when the player's character has been attacked by the enemy character or when a large shake has occurred which could shake the player's body (player's character) in the game world. The subgrip 1238 is a portion for adjusting the direction in which the muzzle 1231 is aimed at the target on the screen, as described above. Therefore, a situation can be realistically reproduced in which the player's character is shot or it is difficult for the player to aim at the target due to a large shake by causing the vibrator 1274 to vibrate in the subgrip 1238 to change the direction of the muzzle 1231 to only a small extent.

The first embodiment has been described above. Note that the elements according to the first embodiment may be appropriately changed in design without departing from the scope of the invention.

For example, the view point direction lever 1250 and the moving direction lever 1252 may be formed using a trackball or a trackpad instead of the analog levers.

The arrangement relationship between the view point direction lever 1250 and the moving direction lever 1252 may be reversed, and the view point direction lever 1250 and the moving direction lever 1252 may be disposed without being displaced in the horizontal direction.

The data communication between the gun-type controller 1230 and the game device main body 1201 may be performed via cable communication instead of wireless communication.

### <Second embodiment>

A second embodiment to which the invention is applied is described below. This embodiment is basically configured in the same manner as the first embodiment except that the user can change the arrangement position of the moving direction lever 1252 suitable for a right-handed/left-handed person depending on the user's dominant arm. The following description focuses on the details of the above feature. The elements described in the first embodiment are indicated by the same symbols. Description of these elements is omitted.

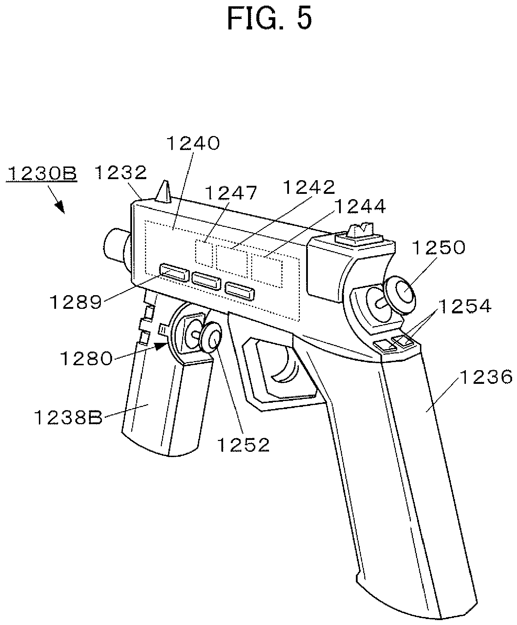

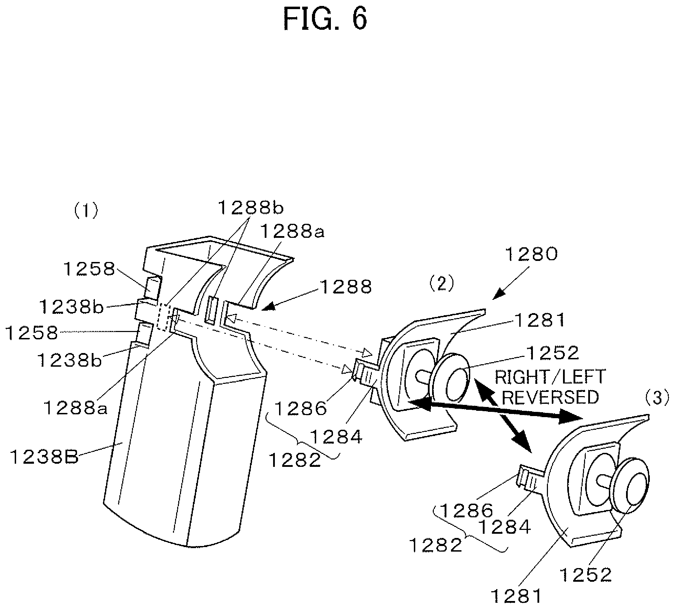

FIG. 5 is an outside oblique view illustrative of the configuration of a gun-type controller 1230B according to this embodiment. FIG. 6 is a partial oblique view showing a portion of the gun-type controller 1230B including a subgrip 1238B. In FIG. 6, signal lines connected to the moving direction lever 1252 and the like are omitted.

As shown in FIGS. 5 and 6, the moving direction lever 1252 according to this embodiment is provided in a lever unit 1280. Specifically, the lever unit 1280 includes a removable substrate 1281 corresponding to part of the second depression 1238a according to the first embodiment cut along the horizontal direction. The moving direction lever 1252 is secured on the removable substrate 1281 in the same manner as in the first embodiment so that the stick faces the inner side of the depression and is displaced to the left from the center of the removable substrate 1281. The removable substrate 1281 is symmetrically formed. An engagement arm 1282 extends outward from each end of the removable substrate 1281. The engagement arm 1282 includes an attachment/detachment operation section 1284 which is provided at the base of the engagement arm 1282 and is pressed when attaching and detaching the removable substrate 1281, and an engagement protrusion which is provided at the end of the attachment/detachment operation section 1284 and protrudes outward in the horizontal direction. The removable substrate 1281 is formed of a resin in the same manner as the barrel 1232 and the like. When the user holds the attachment/detachment operation sections 1284 of the right and left engagement arms 1282 between the fingers and applies force to the attachment/detachment operation sections 1284, the engagement arms 1282 are bent to become closer. When the user releases the force, the attachment/detachment operation sections 1284 recover the original shape due to elasticity.

The subgrip 1238B includes a lever unit installation section 1288 in which the lever unit 1280 can be installed at a position corresponding to the second depression 1238a in the first embodiment. The lever unit installation section 1288 includes fitting holes 1288a into which the attachment/detachment operation sections 1284 of the engagement arms 1282 are fitted, and engagement depressions 1288b which engage with the engagement protrusions 1286, wherein the fitting holes 1288a and the engagement depressions 1288b are provided in the side surfaces of the subgrip 1238B at symmetrical positions.

The moving direction lever 1252 is provided in the lever unit 1280 to be displaced to the left. Therefore, when the user installs the lever unit 1280 in the lever unit installation section 1288 so that the moving direction lever 1252 is displaced to the left with respect to the barrel direction, the moving direction lever 1252 achieves the same arrangement relationship as in the first embodiment, whereby a right-handed arrangement is achieved suitable for a right-handed player to hold the subgrip with the left hand (corresponding to the case where the lever unit 1280 is installed in a state indicated by (2) in FIG. 6). On the other hand, when the user vertically rotates the lever unit 1280 by 180 degrees and installs the lever unit 1280 so that the moving direction lever 1252 is displaced to the right with respect to the barrel direction, a left-handed arrangement is achieved suitable for a left-handed player to hold the subgrip with the right hand (corresponding to the case where the lever unit 1280 is installed in a state indicated by (3) in FIG. 6).

In this embodiment, switches 1289 are provided on the side surface of the barrel 1232, as shown in FIG. 5. The controller control unit 1240 includes a signal switching unit 1247. For example, the controller control unit 1240 detects that the lever unit 1280 is installed for a right-handed player when the switch 1289 is turned ON, and detects that the lever unit 1280 is installed for a left-handed player when the switch 1289 is turned OFF. When the lever unit 1280 is installed for a left-handed player, the controller control unit 1240 controls the signal switching unit 1247 so that the vertical direction signal and the horizontal direction signal output from the moving direction lever 1252 are reversed. Note that the circuit in the signal switching unit 1247 may be switched each time the switch 1289 is pressed, thereby reversing the vertical direction signal and the horizontal direction signal output from the moving direction lever 1252. As the signal inversion method, a known switch structure and electronic circuit may be appropriately utilized.

The arrangement of the moving direction lever 1252 is changed as follows.

Specifically, the user holds the attachment/detachment operation sections 1284 of the right and left engagement arms 1282 between the fingers and applies force to the attachment/detachment operation sections 1284 to cause the engagement arms 1282 to be bent closer, thereby releasing the engagement of the engagement protrusion 1284 and the engagement depression 1288b. The user removes the lever unit 1280 from the lever unit installation section 1288. The user then vertically rotates the lever unit 1280 by 180 degrees. The user causes the engagement arms 1282 to be bent by holding the attachment/detachment operation sections 1284 between the fingers and applying force to the attachment/detachment operation sections 1284, and inserts the lever unit 1280 into the lever unit installation section 1288. The user aligns the engagement protrusion 1284 with the position of the engagement depression 1288b, and releases the engagement arms 1282. This causes the engagement protrusion 1284 to engage with the engagement depression 1288b so that the lever unit 1280 is secured in the lever unit installation section 1288. In this case, since the signal line connected with the moving direction lever 1252 is twisted by 180 degrees, it is necessary to provide the signal line with a sufficient flexibility and length so that breakage due to twisting does not occur. The user then presses the switch 1289 to set signal inversion.

According to this embodiment, the player compares the player's dominant arm and the arrangement of the lever unit 1280 of the gun-type controller 1230B, and rotates the lever unit 1280 by 180 degrees when the arrangement of the lever unit 1280 is not appropriate for the player to achieve a lever arrangement suitable for the player's dominant arm. Since it suffices that the player to remove and insert the lever unit 1280 and turn ON/OFF the switch 1289 according to the player's dominant arm, even a child player can achieve an arrangement suitable for the player's dominant arm.

The gun-type controller according to this embodiment is configured so that only the moving direction lever 1252 can be vertically rotated by 180 degrees. Note that the same configuration may also be applied to the view point direction lever 1250.

The gun-type controller according to this embodiment is configured so that the moving direction lever 1252 is vertically rotated by 180 degrees while the signal line is connected with the moving direction lever 1252. Note that the gun-type controller according to this embodiment is not limited thereto. For example, the gun-type controller according to this embodiment is configured so that the signal lines are connected using a removable coupler which can be rotated by 180 degrees, and the signal line are reversed using the coupler along with attachment and detachment of the lever unit 1280. In this case, since the signal output to the controller control unit 1240 is not reversed before and after inversion, the switch 1289 and the signal switching unit 1247 can be omitted. In this case, a magnetic connection terminal may be used instead of the coupler.

A configuration may also be employed in which the switch 1289 and the signal switching unit 1247 are omitted, and the signal of the moving direction lever 1252 is switched by means of software by allowing the player to select a right-handed/left-handed arrangement before starting the game by setting the controller and the like.

The gun-type controller according to this embodiment is configured so that the moving direction lever 1252 can be removed as the means for allowing the moving direction lever 1252 to be displaced to the left or right from the center of the barrel 1232. Note that the gun-type controller according to this embodiment is not limited thereto. For example, a configuration may also be employed in which a guide groove is formed in the second depression 1238a according to the first embodiment in the horizontal direction, a guide piece which is guided in the guide groove is provided to the moving direction lever 1252, and the moving direction lever 1252 is slidingly moved to either position and secured by means of friction between the guide groove and the guide piece, a latch mechanism, or the like.

### <Third embodiment>

A third embodiment to which the invention is applied is described below. This embodiment is basically configured in the same manner as the first embodiment except that the user can change the installation position of the subgrip 1238 with respect to the barrel 1232. The following description focuses on the details of the above feature. The elements described in the first embodiment are indicated by the same symbols. Description of these elements is omitted.

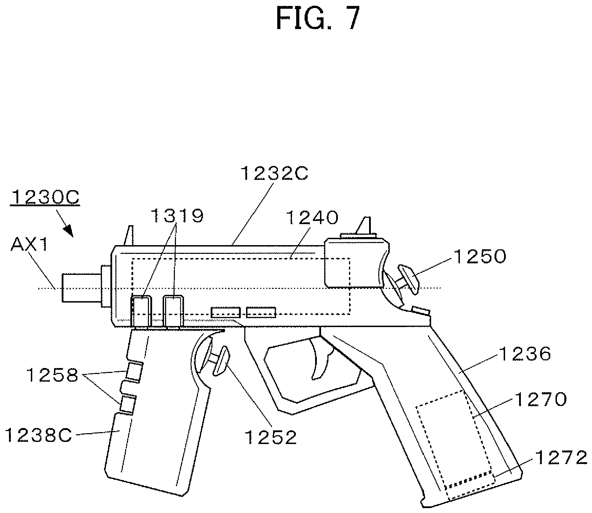

FIG. 7 is a left side view showing the outward appearance of a gun-type controller 1230C according to this embodiment. As shown in FIG. 7, the gun-type controller 1230C according to this embodiment has a configuration in which the portion corresponding to the subgrip 1238 according to the first and second embodiment is separately formed from the barrel as a subgrip Assy (subgrip assembly) 1238C, and attached to a barrel 1232C to be rotationally moved around a barrel direction axis AX1.

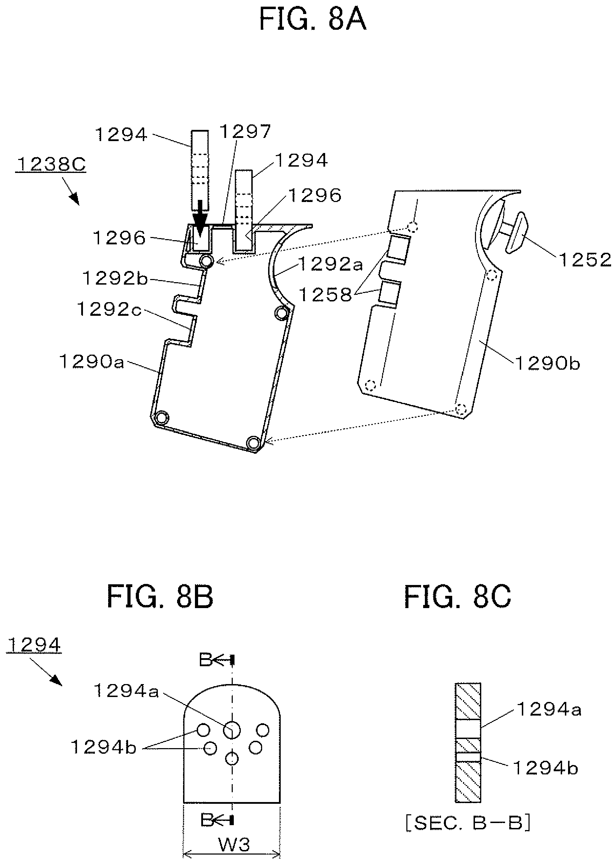

FIG. 8 is a configuration diagram showing the configuration of the subgrip Assy 1238C according to this embodiment. As shown in FIG. 8, the subgrip Assy 1238C includes subgrip half pieces 1290a and 1290b divided along the barrel direction. The appearance the subgrip is formed by connecting the subgrip half pieces 1290a and 1290b.

The subgrip half pieces 1290a and 1290b are provided with device engagement sections 1292a to 1292c engaging with the input devices such as the sublever 1252 and the front operation buttons 1258. A suspended piece fitting section 1296 into which a suspended piece 1294 is fitted, and a signal line insertion hole 1297 into which the signal lines connected with the sublever 1252 and the front operation button 1258 are inserted are formed in the end face corresponding to the upper end of the grip.

As shown in the front view in FIG. 8B and the vertical cross-sectional view along the line B-B in FIG. 8C, the suspended piece 1294 is a sheet-shaped material having a width W3 which is smaller to some extent than the width of the subgrip Assy 1238C. The lower end of the suspended piece 1294 has a shape suitable for fitting into the suspended piece fitting section 1296. A swing pin insertion hole 1294a into which a swing pin described later is inserted is formed above the horizontal center axis, and fixed pin insertion holes 1294b are formed which are disposed along an arc around the swing pin insertion hole 1294a.

The subgrip Assy 1238C is assembled as follows. The device engagement sections 1292a to 1292c, the sublever 1252, and the front operation buttons 1258 are fitted into one of the subgrip half pieces 1290a and 1290b. The lower end of the suspended piece 1294 is fitted into the suspended piece fitting section 1296, and secured using an adhesive. The other of the subgrip half pieces 1290a and 1290b is combined to cover the above subgrip half piece to complete the subgrip Assy 1238C . The signal lines connected with the sublever 1252 and the front operation button 1258 are pulled out in the same direction as the suspended piece 1294 through the signal line insertion hole 1297.

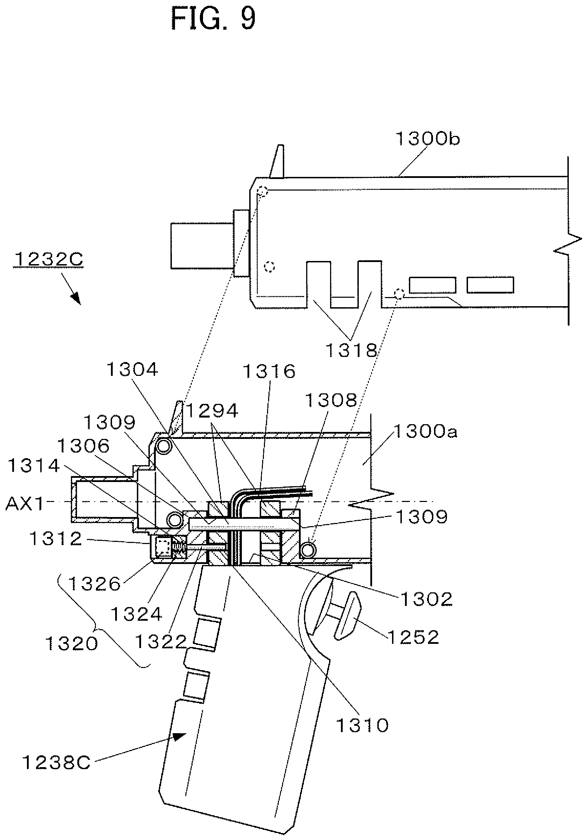

FIG. 9 is a configuration diagram illustrative of the configuration of the barrel 1232C according to this embodiment. As shown in FIG. 9, the barrel 1232C according to this embodiment includes barrel half pieces 1300a and 1300b divided along the barrel direction. The barrel 1232C is formed by connecting the barrel half pieces 1300a and 1300b.

The barrel half pieces 1300a and 1300b have a suspended piece insertion slot 1302, into which the upper end of the suspended piece 1294 projecting from the sublever Assy1238C can be inserted, in the bottom surface. A front swing pin stay 1306 and a rear swing pin stay 1308 are provided in the barrel at positions on the front and rear sides of the suspended piece insertion slot 1302, the front swing pin stay 1306 and the rear swing pin stay 1308 supporting and securing the front and rear ends of the swing pin 1304 in parallel with the barrel direction axis.

The front swing pin stay 1306 and the rear swing pin stay 1308 are provided with swing pin fitting grooves 1309 in parallel with the barrel direction axis AX1 right under the barrel direction axis AX1. When combining the barrel half piece 1300a and the barrel half piece 1300b, the swing pin fitting grooves 1309 function as fitting holes which support the swing pin 1304 in parallel with the barrel direction axis AX1 right under the barrel direction axis AX1 and secure the front and rear ends of the swing pin 1304.

The front swing pin stay 1306 includes a fixed pin fitting groove 1310 parallel to the barrel direction axis AX1 right under the swing pin fitting groove 1309. The distance between the swing pin fitting groove 1309 and the fixed pin fitting groove 1310 is set to be the same as the distance between the swing pin insertion hole 1294a and the fixed pin insertion hole 1294b of the suspended piece 1294. When combining the barrel half piece 1300a and the barrel half piece 1300b, the fixed pin fitting groove 1310 supports and secures the fixed pin 1322 in parallel with the barrel direction axis AX1 right under the barrel direction axis AX1 so that the barrel half piece 1300a and the barrel half piece 1300b are placed on either side of the fixed pin 1322.

The fixed pin 1322 is provided at the end of a subgrip position change pin 1320. The subgrip position change pin 1320 is a stop means for the subgrip Assy 1238C, and includes the fixed pin 1322, a screw section 1324, and a pinhead 1326 having a hexagonal wrench hole and the like in that order from the end.

The subgrip position change pin 1320 is inserted into a position change pin installation section 1312 provided in the front surfaces of the barrel half pieces 1300a and 1300b in that order from the fixed pin 1322, and is secured by screwing the screw section 1324 into a built-in nut 1314 secured in the installing section. When the subgrip position change pin 1320 is secured, the fixed pin 1322 at the end is fitted and inserted into the fixed pin fitting groove 1310 in the front swing pin stay 1306, and inserted into the fixed pin insertion hole 1294b in the suspended piece 1294 which has been inserted through the suspended piece insertion slot 1302.

The barrel 1232C is assembled as follows.

The upper end of the suspended piece 1294 of the subgrip Assy 1238C assembled in advance is inserted into the suspended piece insertion slot 1302 of one of the barrel half pieces 1300a or 1300b. The signal lines 1316 protruding from the signal line insertion hole 1297 in the subgrip Assy 1238C are directed into the barrel through the space between the front swing pin stay 1306 and the rear swing pin stay 1308.

The swing pin 1304 is inserted into the swing pin insertion hole 1294a in the suspended piece 1294, and the front and rear ends of the swing pin 1304 are fitted into the swing pin fitting grooves 1309 in the swing pin stays 1306 and 1308. The above barrel half piece is covered with the other of the barrel half pieces 1300a and 1300b to combine the barrel half pieces. As a result, the subgrip Assy 1238C is suspended by the swing pin 1304 and is swingably supported around the swing pin 1304.

The subgrip position change pin 1320 is inserted into the position change pin installation section 1312 of the barrel 1232C and screwed into the nut 1314, and the subgrip Assy 1238C is stopped by the subgrip position change pin 1320 to complete the barrel 1232C.

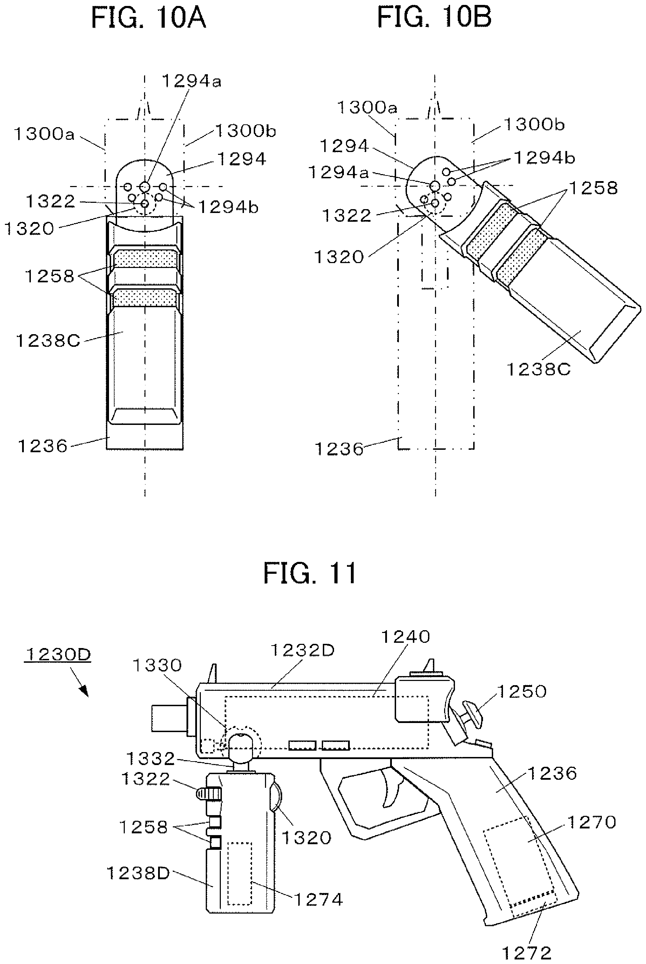

According to the above configuration, when the player desires to change the installation angle of the subgrip, the player removes the subgrip position change pin 1320, swings the subgrip Assy 1238C in an appropriate direction, as indicated by the front view of the subgrip shown in FIG. 10, and inserts the subgrip position change pin 1320 into the position change pin installation section 1312 of the barrel 1232C to stop the subgrip Assy 1238C, thereby achieving the desired installation angle. In this case, the suspended piece 1294 swings to the left/right. As shown in FIG. 9, hollow portions 1318 are provided in the side surfaces of the barrel half pieces 1300a and 1300b to prevent interference with the suspended piece 1294 which swings to the left/right. When it is undesirable that the hollow portions 1318 be exposed, removable plugs 1319 may be provided in the hollow portions 1318.

As described above, the gun-type controller 1230C according to this embodiment enables the installation angle of the subgrip to be changed around the barrel. Therefore, the player can play the game while holding the gun-type controller 1230C in a more comfortable position, whereby the player can be further involved in the game.

The gun-type controller according to this embodiment is configured so that the view point direction lever 1250 and the moving direction lever 1252 are securely installed in the same manner as in the first embodiment. Note that a removable configuration may also be applied in the same manner as in the second embodiment.

### <Fourth embodiment>

A fourth embodiment to which the invention is applied is described below. This embodiment is basically configured in the same manner as the first embodiment except that the user can arbitrarily position the subgrip with respect to the barrel in the forward, backward, left, and right directions. The following description focuses on the details of the above feature. The elements described in the first embodiment are indicated by the same symbols. Description of these elements is omitted.

FIG. 11 is a left side view showing the outward appearance of a gun-type controller 1230D according to this embodiment. As shown in FIG. 11, the gun-type controller 1230D according to this embodiment has a configuration in which the portion (subgrip 1238D) corresponding to the subgrip 1238 according to the first embodiment is supported by a ball joint 1330. The gun-type controller 1230D according to this embodiment includes a vertical direction dial 1320 and a horizontal (right and left) direction dial 1322 as input means corresponding to the sublever 1252 according to the first embodiment.

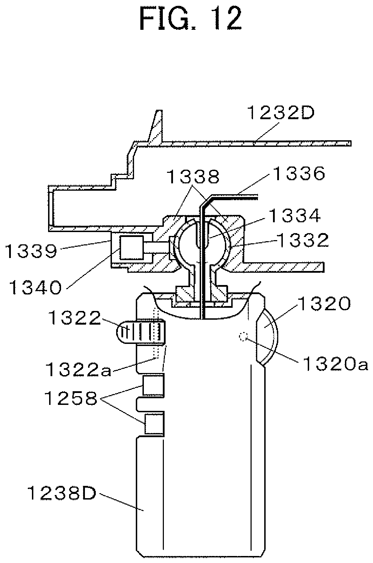

FIG. 12 is a cross-sectional view showing an example of the structure of the gun-type controller 1230D. As shown in FIG. 12, a hollow ball head 1332 is securely installed on the upper end of the subgrip 1238D according to this embodiment. The inner space of the ball head 1332 is connected with the inner space of the subgrip. The signal lines 1336 connected with the vertical direction dial 1320, the horizontal direction dial 1322, and the like are directed into the barrel 1232D through an opening 1334 provided at the end of the ball head 1332.

A ball head tightening section 1338 which pivotally supports the ball head 1332 so that the ball head 1332 can rotationally move in the forward, backward, left, and right directions is provided in the front lower portion of the inside of the barrel 1232D. The force of the ball head tightening section 1338 for tightening and securing the ball head 1332 is adjusted by a tightening bolt 1340 provided in an opening 1339 which opens through the front surface of the barrel 1232D.

The vertical direction dial 1320 and the horizontal direction dial 1322 are rotational input devices with which the user inputs the direction by rotating the disk-like dial.

The vertical direction dial 1320 includes a rotary shaft 1320a in the right/left direction of the subgrip 1238D, and is disposed at a position at which the thumb is disposed when the player stretches the thumb while holding the subgrip 1238D with the left hand so that the periphery of the disk is disposed along the long side direction of the subgrip 1238D. The upward direction input and the downward direction input of the vertical direction dial 1320 are associated with the upward/downward direction inputs of the sublever 1252 according to the first embodiment.

The horizontal direction dial 1322 includes a rotary shaft 1322a in the long side direction of the subgrip 1238D, and is disposed at a position at which the player's forefinger is disposed when the player holds the subgrip 1238D with the left hand so that the periphery of the disk is disposed along the right/left direction (horizontal direction) of the subgrip 1238D. The right direction input and the left direction input of the horizontal direction dial 1322 are associated with the right/left direction input of the sublever 1252 according to the first embodiment.

According to the above configuration, the player can loosen the tightening bolt 1340 and arbitrarily change the installation angle of the subgrip 1238D with respect to the barrel 1232D in the forward, backward, left, and right directions. Therefore, the player can play the game play while holding the gun-type controller 1230D in a more comfortable position, whereby the player can be further involved in the game.

The gun-type controller according to this embodiment is configured so that the vertical direction dial 1320 and the horizontal direction dial 1322 are provided in the subgrip 1238D. Note that the sublever may also be provided in the same manner as in the first and second embodiments. The ball joint may be tightened appropriately using a part other than the bolt.

### <Fifth embodiment>

A fifth embodiment to which the invention is applied is described below. This embodiment is basically configured in the same manner as the first embodiment except that the subgrip is displaced from the barrel so that the longitudinal direction of the subgrip does not intersect the barrel. The elements described in the first embodiment are indicated by the same symbols. Description of these elements is omitted.

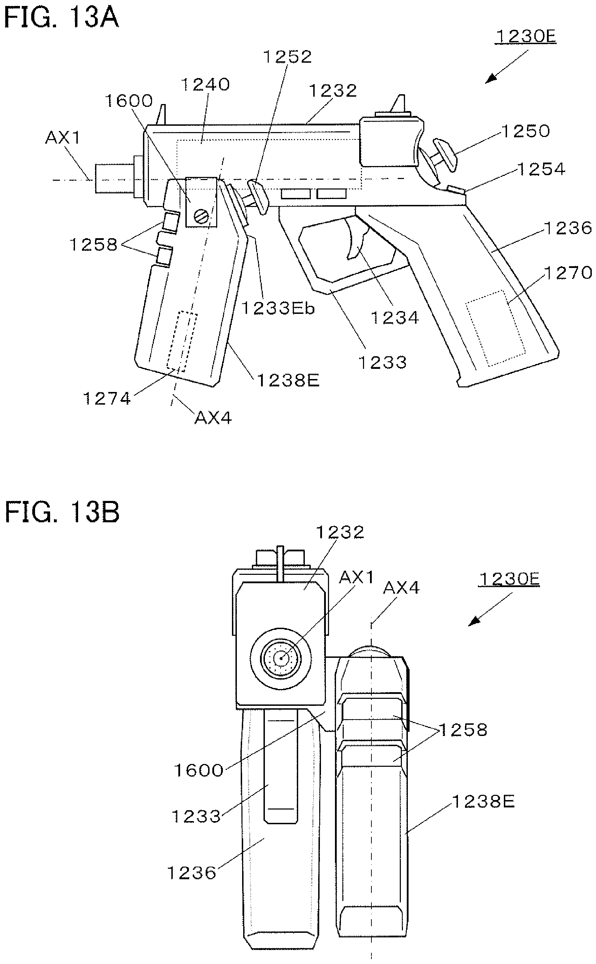

FIG. 13 is an external view showing an example of the configuration of a gun-type controller 1230E according to this embodiment. FIG. 13A is a left side view, and FIG. 13B is a front view. As shown in FIG. 13, the gun-type controller 1230E according to this embodiment is configured so that a subgrip 1238E is displaced to the left (front in FIG. 13A) with respect to the barrel 1232 through a grip stay 1600, and is secured so that the lower end of the grip faces forward to some extent. Specifically, the barrel direction axis AX1 of the barrel 1232 and the longitudinal direction AX4 of the subgrip 1238E have a positional relationship in which the barrel direction axis AX1 and the longitudinal direction AX4 are displaced and do not intersect. Since the longitudinal direction of the subgrip 1238E is diagonally tilted forward, the longitudinal direction of the subgrip 1238F does not intersect the barrel 1232.

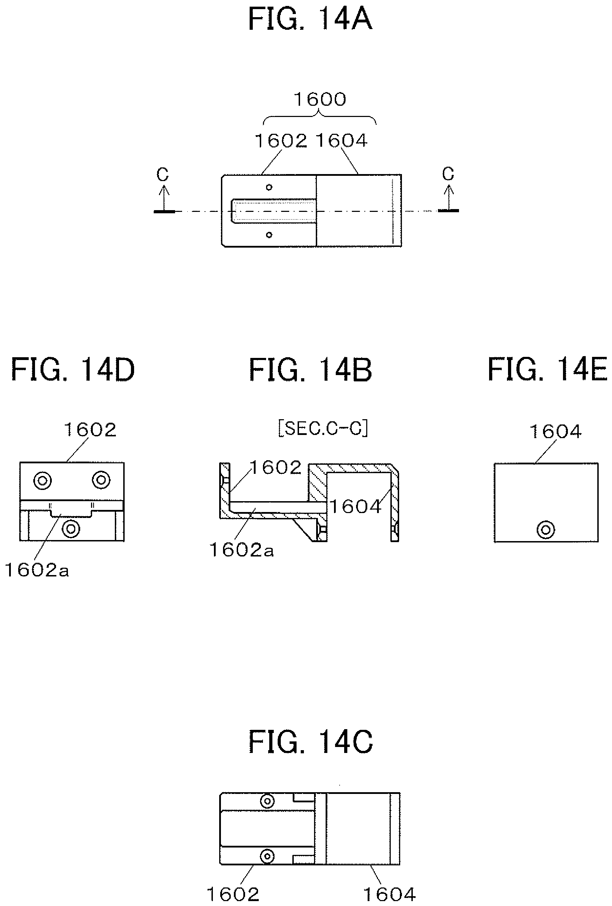

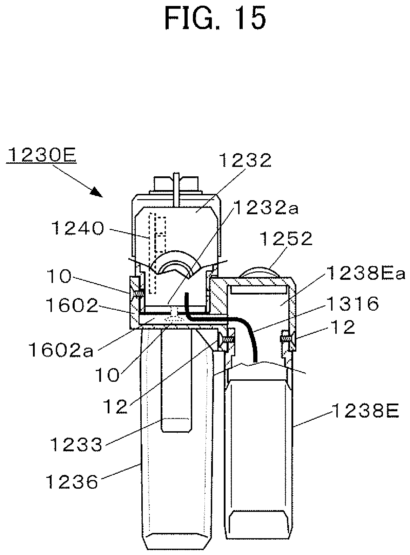

FIG. 14 is a view showing the configuration of the grip stay 1600 according to this embodiment. FIG. 14A is a top view, FIG. 14B is a cross-sectional view along the line C-C, FIG. 14C is a bottom view, FIG. 14D is a left side view, and FIG. 14E is a right side view. FIG. 15 is a front partial cross-sectional view showing an installation structure around the grip stay 1600.

As shown in FIGS. 14 and 15, the grip stay 1600 is configured so that a groove-shaped barrel installation section 1602 which opens upward and a groove-shaped subgrip installation section 1604 which opens downward are connected almost in the shape of the letter S when viewed from the upper side.

The barrel installation section 1602 is inserted into a stay installation groove 1232a provided in the front lower side of the barrel 1232 from the lower side of the barrel, and is secured on the barrel 1232 using screws 10 from the bottom surface of the barrel 1232 and the side surface (left side surface in FIG. 14) opposite to the subgrip installation section 1604 so that the barrel installation section 1602 is accommodated in the stay installation groove 1232a. A groove 1602a which opens upward (toward the barrel 1232) is provided in the portion of the barrel installation section 1602 corresponding to the bottom surface. The end (right end in FIG. 14) of the groove 1602a communicates with the inside of the subgrip installation section 1604.

The subgrip installation section 1604 is provided to cover a stay installation section 1238Ea provided at the top of the subgrip 1238E, and is secured on the subgrip 1238E from the right and left sides using screws 12. The stay installation section 1238Ea of the subgrip 1238E has openings which respectively open upward, right, and left so that the signal lines 1316 from the moving direction lever 1252 and the front operation button 1258 to the controller control unit 1240 can be pulled out to the right or left side of the subgrip 1238E.

When the grip stay 1600 is attached to the subgrip 1238E, the openings in the stay installation section 1238Ea are covered so that the subgrip installation section 1604 of the grip stay 1600 is accommodated in the stay installation section 1238Ea to form a continuous surface with the left side surface and the top surface of the subgrip 1238E.

The signal lines 1316 from the front operation button 1258 and the moving direction lever 1252 provided in the subgrip 1238E are directed into the barrel 1232 from the subgrip installation section 1604 through the opening in the stay installation section 1238Ea and the groove 1602a, and electrically connected with the controller control unit 1240.

According to this configuration, the subgrip 1238E can be disposed to face forward and to be displaced to the left with respect to the barrel direction axis AX1 of the barrel 1232.

This embodiment is not limited to the configuration in which the subgrip 1238E is displaced to the left with respect to the barrel 1232, but may also be applied to a configuration in which the subgrip 1238E is displaced to the right with respect to the barrel 1232 without changing the elements. Specifically, the grip stay 1600 has a symmetrical shape with respect to the cross-sectional line C-C (see FIG. 14). Moreover, the signal lines 1316 can be pulled out to the right or left side of the subgrip 1238E through the openings in the stay installation section 1238Ea. Therefore, a right-handed gun-type controller in which the subgrip 1238E is displaced to the left or a left-handed gun-type controller in which the subgrip 1238E is displaced to the right can be formed by reversing the positions of the grip stay 1600 and the subgrip 1238E with respect to the barrel 1232.

In this embodiment, since the subgrip 1238E and the grip stay 1600 can be disassembled by removing the screws, the user can change the displacement (offset) position of the subgrip 1238E.

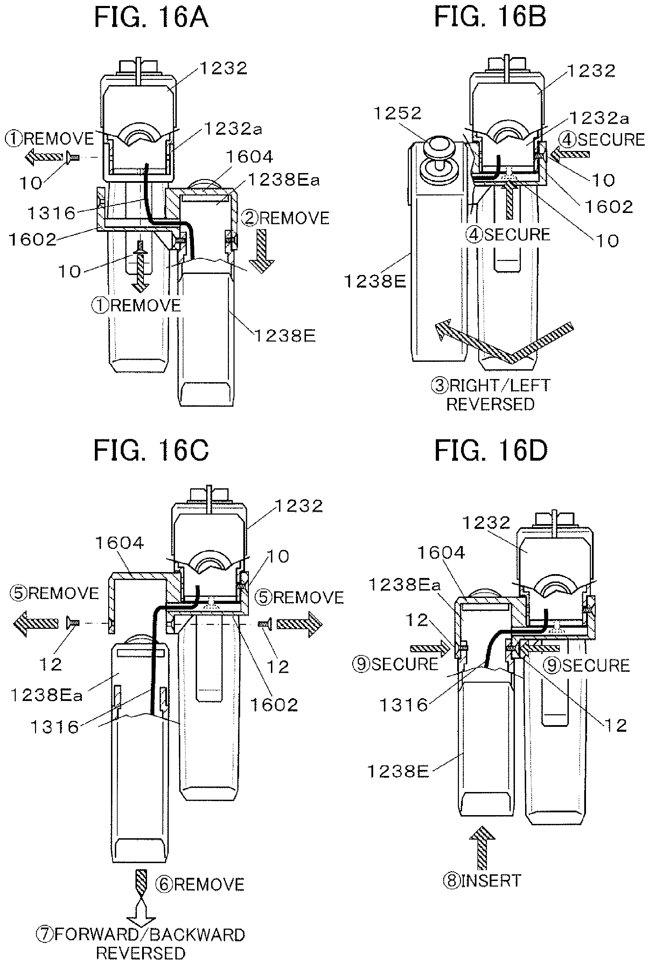

FIG. 16 is a view showing the procedure of changing the gun-type controller 1230E according to this embodiment from a right-handed gun-type controller to a left-handed gun-type controller, for example. The installation structure around the grip stay 1600 is shown as a partial cross section. As shown in FIG. 16A, the screws 10 which secure the barrel 1232 and the grip stay 1600 are removed, and the grip stay 1600 is removed by pulling the grip stay 1600 downward from the barrel in a state in which the subgrip 1238E is secured. As shown in FIG. 16B, the grip stay 1600 is reversed in a state in which the subgrip 1238E is secured so that the subgrip 1238E is positioned on the right of the barrel 1232. The grip stay 1600 is again attached to the barrel installation section 1602. Specifically, the barrel installation section 1602 is inserted into the stay installation groove 1232a, and secured using the screws 10.

In this state, the subgrip 1238E is displaced to the right with respect to the barrel 1232 with the front and the rear of the subgrip 1238E facing wrong directions. As shown in FIG. 16C, the screws 12 are removed to separate the grip stay 1600 and the subgrip 1238E, and the subgrip 1238E is removed from the subgrip installation section 1604. The removed subgrip 1238E is reversed in the forward/backward direction.

As shown in FIG. 16D, the subgrip 1238E reversed in the forward/backward direction is again secured on the grip stay 1600 using the screws 12.

As described above, the gun-type controller 1230E according to this embodiment is provided with more excellent holding properties by displacing the subgrip 1238E to the right or left with respect to the barrel 1232. For example, the main grip 1236 and the subgrip 1238 extend from the bottom surface of the barrel in the gun-type controller 1230 according to the first embodiment. Therefore, when a right-handed player holds the gun-type controller 1230, the right hand holding the main grip 1236 and the left hand holding the subgrip 1238 line up along the direction of the barrel 1232. For example, when the player holds the gun-type controller 1230 in front of the player's body (most players are generally in this position when playing a game using a gun-type controller), the player must be in an uncomfortable position in which the right hand is protruded forward while bending the right arm at the elbow close to the body and the left hand is protruded forward while positioning the left hand toward the right.

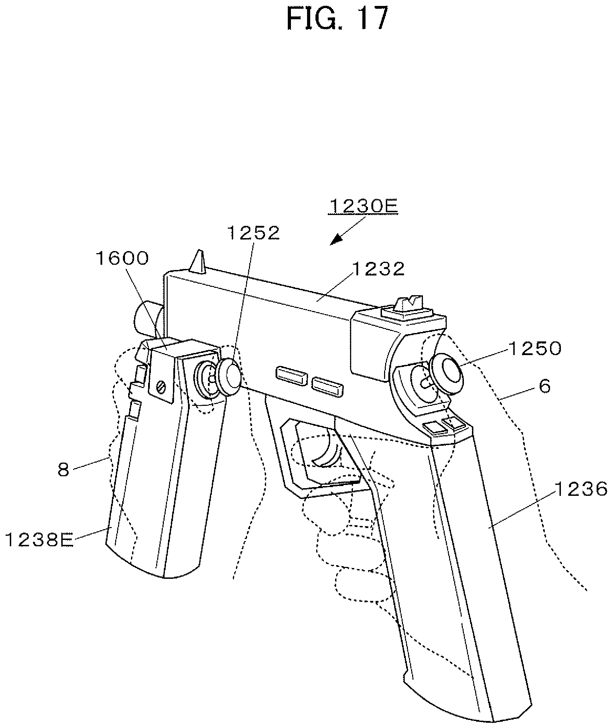

As shown in FIG. 17, the subgrip 1238E of the gun-type controller 1230E according to this embodiment is displaced to the left with respect to the barrel 1232. Therefore, the player need not position the left hand to the right as compared with the first embodiment. As a result, the player can position the left hand toward the left to hold the gun-type controller 1230E while relatively increasing the distance between arms, whereby the player can more comfortably hold the controller. Moreover, since the upper portion of the subgrip is not covered by the barrel, differing from the first embodiment, the player can more easily hold the subgrip 1238E.

According to this embodiment, since the subgrip 1238E is displaced from the lower side of the barrel 1232, the player can more easily hold and operate the subgrip 1232E.

Specifically, a slope 1238Eb of which the normal slopes backward and upward is formed on the rear side of the upper portion of the subgrip 1238E, and the moving direction lever 1252 is provided on the slope 1238Eb. Since other elements are not disposed above the moving direction lever 1252, the player can easily hold the subgrip 1232E irrespective of the size of the hand. The axis of the moving direction lever 1252 when the gun is in a neutral state faces in the normal direction of the slope 1238Eb and approximates that of the view point direction lever 1250. Specifically, the operation feel of the moving direction lever 1252 in the forward, backward, left, and right directions is almost the same as the operation feel of the view point direction lever 1250 in the forward, backward, left, and right directions. Therefore, the player need not master the operation input separately for the right and left hands, whereby convenience to the player (particularly an inexperienced player) is increased.

In recent video games, it may be required that an operation input be variably assigned to an input device depending on the player's preference (called "operation input configuration"). According to this embodiment, the operation feel of the moving direction lever 1252 in the forward, backward, left, and right directions can be made almost the same as the operation feel of the view point direction lever 1250 in the forward, backward, left, and right directions. Therefore, even if the operation inputs assigned to the view point direction lever 1250 and the moving direction lever 1252 are reversed, it is unnecessary for the player to again master the directional feel of each lever accompanying a change in setting, whereby the player can promptly make an intuitive operation.

### <Sixth embodiment>

A sixth embodiment to which the invention is applied is described below. This embodiment is basically configured in the same manner as the first embodiment except that the subgrip is displaced from the barrel and the moving direction lever is provided on the upper surface of the subgrip. The elements described in the first embodiment are indicated by the same symbols. Description of these elements is omitted.

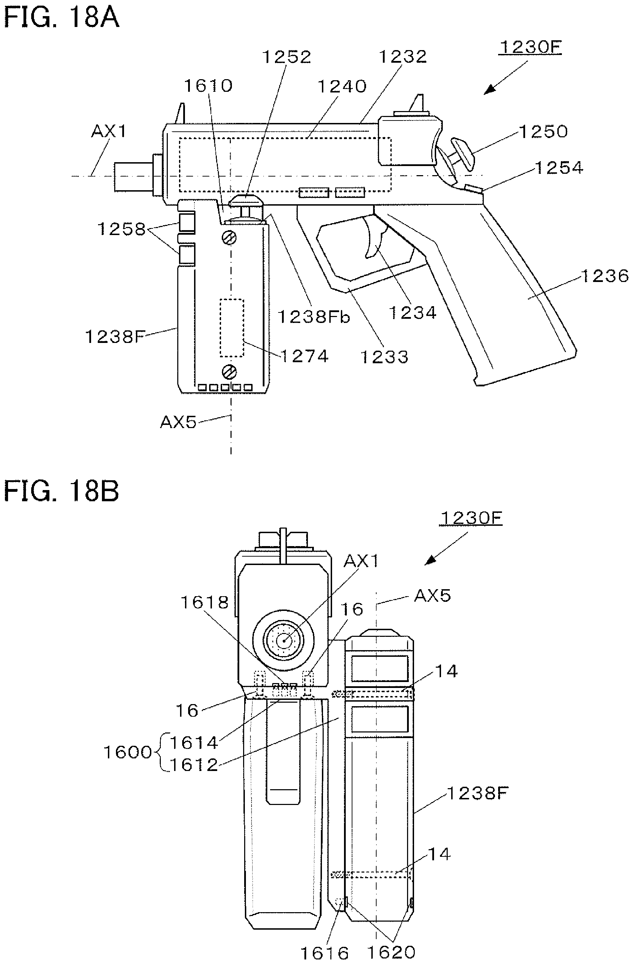

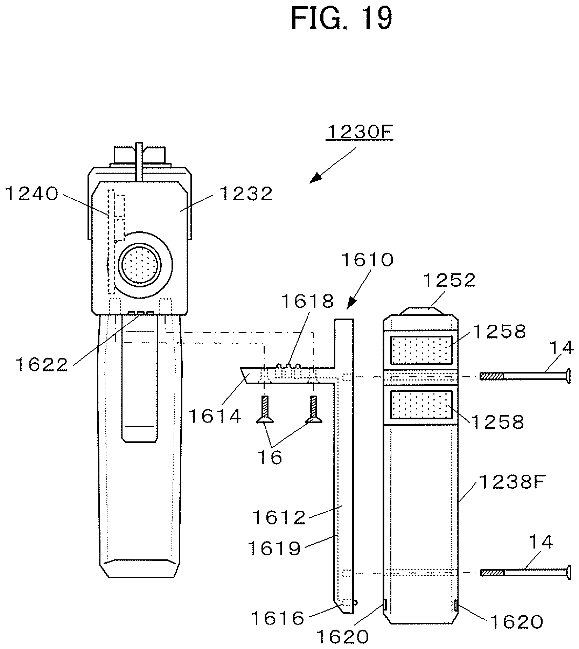

FIG. 18 is an external view showing an example of the configuration of a gun-type controller 1230F according to this embodiment. FIG. 18A is a left side view, and FIG. 18B is a front view. FIG. 19 is a front exploded view showing an example of the configuration of the gun-type controller 1230F according to this embodiment. FIGS. 18 and 19 show a right-handed gun-type controller. A left-handed gun-type controller has a reversed relationship with respect to the barrel 1232.

As shown in FIG. 18, the gun-type controller 1230F according to this embodiment is configured so that a subgrip 1238F is displaced to the left (front in FIG. 18A) with respect to the barrel 1232 through a grip stay 1610, and is secured so that the lower end of the grip faces almost downward. Specifically, the barrel direction axis AX1 of the barrel 1232 and the longitudinal direction AX5 of the subgrip 1238F have a positional relationship in which the barrel direction axis AX1 and the longitudinal direction AX5 are displaced and do not intersect.

As shown in FIG. 19, the grip stay 1610 includes a subgrip securing section 1612 secured on the side surface of the subgrip 1238F using through-screws 14, and a barrel securing section 1614 which extends almost perpendicularly from the subgrip securing section 1612 and is secured on the bottom surface of the barrel 1232 using screws 16.

A first contact pin group 1616 in which contact pins are arranged protrudes from the contact surface between the subgrip securing section 1612 and the subgrip 1238F (right end face of the subgrip securing section 1612 in FIG. 19). A second contact pin group 1618 protrudes from the contact surface between the barrel securing section 1614 and the barrel 1232 (upper surface of the barrel securing section 1614 in FIG. 19). The pins of the first contact pin group 1616 and the second contact pin group 1618 are respectively connected by an electric circuit 1619 formed in the grip stay 1610. When forming the grip stay 1610 using a rigid resin, the electric circuit 1619 is preferably formed by molding, for example.

When the subgrip 1238F is attached to the grip stay 1610, the first contact pin group 1616 contacts a signal terminal group 1620 provided on each side surface of the subgrip 1238F so that signals from the front operation button 1258 and the moving direction lever 1252 are transmitted through the signal terminal group 1620. When the grip stay 1610 is attached to the barrel 1232, the second contact pin group 1618 contacts a signal terminal group 1622 provided on the bottom surface of the barrel 1232 so that signals are transmitted to the controller control unit 1240 via the electric circuit 1619.

In this embodiment, an end face 1238Fb of which the normal faces almost perpendicularly upward is provided at the top of the subgrip 1238F, and the moving direction lever 1252 is provided on the end face, as shown in FIG. 18. The moving direction lever 1252 according to this embodiment is provided so that the lever axis in a neutral state faces almost perpendicularly upward.

According to this embodiment, holding properties equal to those of the fifth embodiment can be achieved by displacing the subgrip 1238F with respect to the barrel 1232. Moreover, disassembling/assembling is facilitated by using the screws for securing the barrel 1232, the grip stay 1610, and the subgrip 1238F, whereby the specification can be easily changed for a right-handed/left-handed specification during the manufacturing process. According to this embodiment, since the signal lines 1316 provided from the barrel 1232 to the subgrip 1238F via the grip stay 1610 are omitted by employing a configuration in which electrical signals are transmitted using the contact pins, the user can more easily change the configuration depending on the user's dominant arm.

Moreover, the forward, backward, left, and right operation directions of the moving direction lever 1252 can be caused to coincide with the forward, backward, left, and right directions in the plane (e.g. ground and deck) where the player's character moves in the game by disposing the lever axis of the moving direction lever 1252 in a neutral state almost straight upward. Therefore, a more intuitive operation input can be made as compared with the first embodiment. In this embodiment, the subgrip 123 8F is provided to extend almost perpendicularly downward from the barrel 1232. Note that the subgrip 1238F may be diagonally disposed so that the longitudinal direction of the subgrip 1238F faces diagonally forward in the same manner as in the first embodiment. In this case, the same effects can be achieved by disposing the moving direction lever 1252 so that the lever axis faces almost perpendicularly upward in a neutral state.

### <Seventh embodiment>

A seventh embodiment to which the invention is applied is described below. This embodiment is basically configured in the same manner as the first embodiment except that the subgrip can be arbitrarily removed from the barrel. The following description focuses on the details of the above feature. The elements described in the first embodiment are indicated by the same symbols. Description of these elements is omitted.

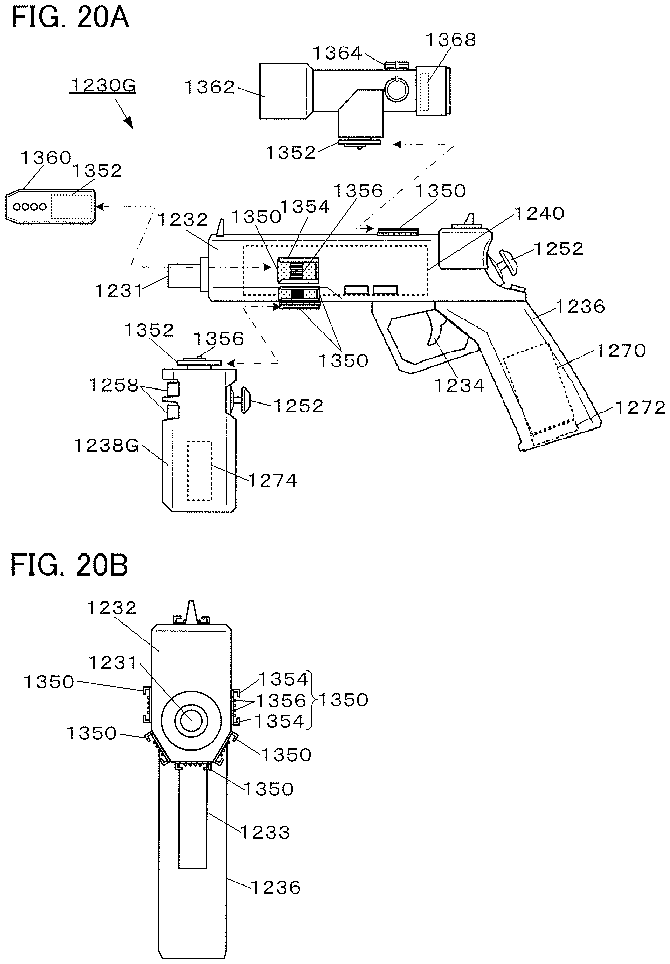

FIG. 20 is an external view showing an example of the configuration of a gun-type controller 1230G according to this embodiment. FIG. 20A is a left side view, and FIG. 20B is a front view.

As shown in FIG. 20, the gun-type controller 1230G according to this embodiment includes accessory shoes 1350 provided on the outer surface of the barrel 1232. Specifically, the accessory shoes 1350 are provided on the right and left side surfaces, the right and left downwardly inclined surfaces, and the bottom surface of the front portion of the barrel 1232, as shown in FIG. 20B. An accessory shoe 1350 is also provided on the upper surface of the rear portion of the barrel 1232.

A subgrip 1238G corresponding to the subgrip 1238 according to the first embodiment includes an attachment 1352 which is provided on the upper surface and removably connected with the accessory shoe 1350.

The accessory shoe 1350 and the attachment 1352 make up an attachment/detachment mechanism including connection sections 1354 achieving mechanical connection and signal terminals 1356 achieving electrical connection accompanying connection by means of the connection sections 1354. For example, an attachment/detachment mechanism for attaching equipment such as a stroboscope used for a film-type camera and the like may be utilized.

The signal lines connected with the sublever 1252 and the front operation button 1258 of the subgrip 1238G are connected with the signal terminals of the attachment 1360, and are connected with the signal terminals 1356 of the accessory shoe 1350 when the accessory shoe 1350 and the attachment 1360 are connected, whereby the signals are output to the controller control unit 1240.

In this embodiment, a decoration part 1360 and an imitation optical device 1362 having the attachment 1352 are provided as accessories and optional equipment. The combination of connection/disconnection of the signal terminals 1356 is individually set for each device so that the controller control unit 1240 can identify the type of device.

The decoration part 1360 is designed as part of the gun. The decoration part 1360 is attached to the accessory shoe 1350 which is provided on the outer surface of the front portion of the barrel and to which the subgrip 1238G is not attached, thereby preventing the accessory shoe 1350 from being exposed to impair the appearance.

The imitation optical device 1362 is designed to imitate a rifle scope, a night-vision scope, or an aim pointer, for example. The imitation optical device 1362 is attached to the accessory shoe 1350 provided on the upper surface of the rear portion of the barrel 1232 so that an appearance is achieved in which special equipment such as a rifle scope, a night-vision scope, or an aim pointer is attached.

The imitation optical device 1362 includes a small LCD 1368 near an eyepiece portion (right end in the drawing) so that the controller control unit 1240 can display a given image on the small LCD 1368 according to an image signal received from the game device main body 1201. For example, when the imitation optical device 1362 imitates a rifle scope, the game device main body 1201 disposes a special telescopic virtual camera differing from the view point of the player's character in the game space when performing the game process, and controls the photographing direction of the telescopic virtual camera depending on the direction of the muzzle of the gun-type controller 1230G. The game device main body 1201 generates an image photographed by the telescopic virtual camera, transmits the generated image to the gun-type controller 1230G, and displays the image on the small LCD 1368. The player who observes the imitation optical device 1362 can watch the telescopically photographed game world as if watching the game world through an actual scope, whereby a more realistic shooting experience can be realized.

Note that the attachment position of the imitation optical device 1362 is not limited to the upper surface of the rear portion of the barrel 1232. For example, when the imitation optical device 1362 is designed to imitate an aim pointer, a flashlight, or the like, the imitation optical device 1362 is suitably attached to the accessory shoe 1350 provided in the front portion of the barrel.

In this case, when the imitation optical device 1362 is attached and a specific switch 1364 is turned ON, the game device main body 1201 disposes a virtual floodlight facing in the barrel direction in the game space when performing the game process, and controls the irradiation direction of the virtual floodlight depending on the direction of the muzzle of the gun-type controller 1230G, for example. As a result, a situation can be created in which the optical device accessory 1362 functions as an aim pointer or a flashlight and irradiates the game space.

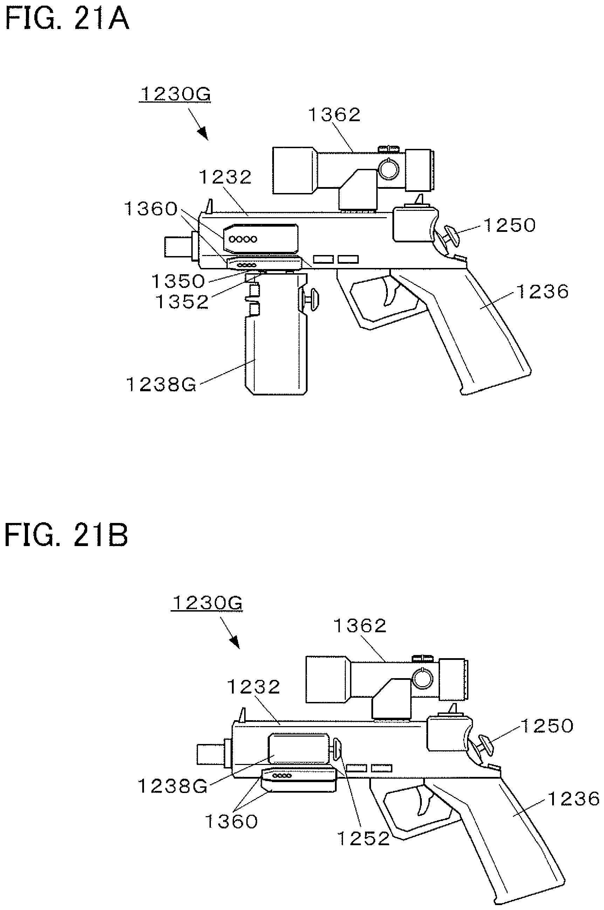

According to this embodiment, the subgrip 1238G can be attached to the left/right side surface, the left/right downwardly inclined surface, or the bottom surface of the barrel according to the player's preference by connecting the subgrip 1238G at the desired position of the accessory shoe 1350. For example, the subgrip 1238G can be attached right under the barrel 1232, as shown in FIG. 21A, or can be attached on the left side surface of the barrel 1232, as shown in FIG. 21B.

Moreover, special equipment can be attached to the gun-type controller 1230G such as that of an actual gun by utilizing the accessory shoe 1350 as a common accessory attachment/detachment portion instead of merely utilizing the accessory shoe 1350 as the attachment/detachment portion for the subgrip 1238G. A more realistic game depending on the attached accessory can be realized by providing an IC which stores identification information of an accessory and the like in the accessory and by causing the controller control unit 1240 to read the identification information through the signal terminal 1356 to electrically or electronically identify the type of accessory and perform a special process (e.g. install a special telescopic virtual camera or a virtual floodlight) during the game process depending on the identified type of accessory.

This embodiment has been described above taking an example in which the individual accessory shoes are provided in respective installation portions. Note that this embodiment is not limited thereto. For example, a configuration may be employed in which a guide rail which slidably guides the attachment 1350 and a conductive line provided in the guide rail and slidably contacting the connection terminal of the attachment 1350 may be linearly provided along the outer surface of the barrel. In this case, the installation position of the subgrip 1238G can be arbitrarily changed along the guide rail.

### <Eighth embodiment>

An eighth embodiment to which the invention is applied is described below. This embodiment is basically configured in the same manner as the first embodiment except that the shape of the subgrip and the arrangement of the sublever differ from those of the first embodiment. The following description focuses on the details of the above feature. The elements described in the first embodiment are indicated by the same symbols. Description of these elements is omitted.

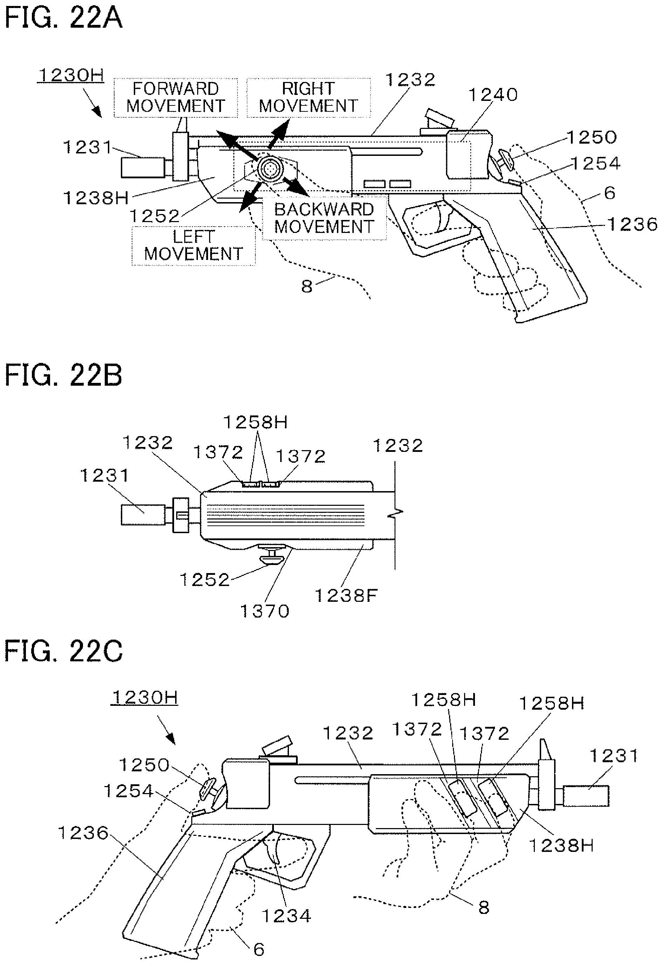

FIG. 22 is an external view showing the configuration of a gun-type controller 1230H according to this embodiment. FIG. 22A is a left side view, FIG. 22B is a top view of the front portion of the barrel, and FIG. 22C is a right side view.

In the gun-type controller 1230H according to this embodiment, a subgrip 1238F is formed on the left side surface, the bottom surface, and the right side surface of the front portion of the barrel 1232 along the outer surface, as shown in FIG. 22. The subgrip 1238H is held with the left hand 8 so that the subgrip 1238H is supported from the bottom.

The moving direction lever 1252 is disposed in a depression 1370 formed in the left side surface of the subgrip 1238H. Specifically, the moving direction lever 1252 is provided so that the stick faces the left of the barrel within a range reached by the thumb placed on the left side surface when the player holds the subgrip 1238H with the left hand 8, and the upward/downward input direction coincides with the bending/stretching direction of the thumb of the left hand 8 holding the subgrip 1238H. The stick is prevented from protruding from the subgrip 1238H by providing the moving direction lever 1252 in the depression 1370, whereby the player can more easily operate the stick of the moving direction lever 1252 with the thumb of the left hand 8. In this embodiment, inputs in the stretching direction (diagonally upward toward the front) and the bending direction (diagonally downward toward the rear) of the thumb respectively correspond to the forward movement and the backward movement of the player's character PC (see FIG. 4), and inputs in the right moving direction (diagonally upward toward the rear) and the left moving direction (diagonally downward toward the front) of the thumb respectively correspond to the right movement and the left movement of the player's character PC.

A front operation button 1258H according to this embodiment is disposed in a fourth depression 1372 formed in the right side surface of the subgrip 1238H. The fourth depression 1372 corresponds to the third depression 1238b according to the first embodiment, and is formed at a position at which the forefinger and the middle finger placed on the right side surface when the player holds the subgrip 1238H with the left hand 8 reach the fourth depression 1372 along the bending/stretching direction of these fingers. The front operation button 1258H is disposed so that the front end face of the front operation button 1258H in an unoperated state is accommodated in the fourth depression 1372 and does not protrude from the right side surface of the subgrip 1238H. Therefore, even if the player holds the subgrip 123 8H with the left hand 8, the player does not erroneously press the front operation button 1258H in the same manner as the front operation button 1258 according to the first embodiment. On the other hand, since the player can identify the position of the front operation button 1258H due to the fourth depression 1372, the player can smoothly operate the front operation button 1258H at the desired timing.

### <Ninth embodiment>

A ninth embodiment to which the invention is applied is described below. This embodiment is described taking a sword-type game controller imitating a sword as an example. The sword-type game controller is a controller used when playing a fencing game in which the player fights an enemy with a sword, for example.

The sword-type controller corresponds to the gun-type controller 1230 according to the first embodiment, although the appearance of the controller and the game used differ, and is used basically in the same manner as in the first embodiment. The following description focuses on the difference from the first embodiment. The same elements as in the first embodiment are indicated by the same symbols. Description of these elements is omitted.

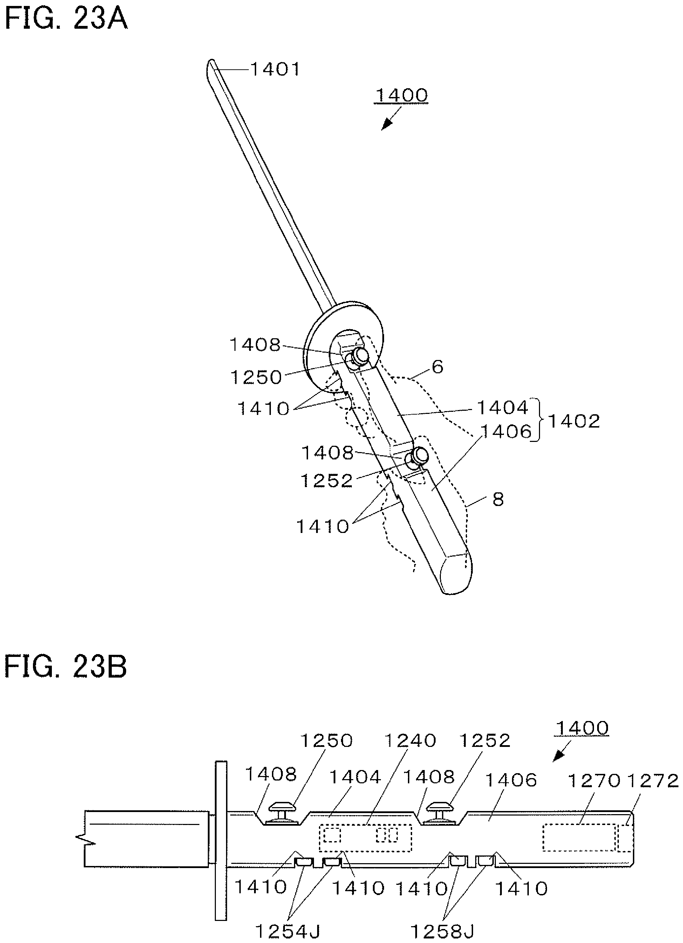

FIG. 23 is an external view showing the configuration of a sword-type game controller 1400 according to this embodiment. FIG. 23A is an oblique view diagonally viewed from the left rear, and FIG. 23B is a left side view. As shown in FIG. 23, the sword-type game controller 1400 according to this embodiment is formed to imitate a sword. The player uses the sword-type game controller 1400 while holding a grip (hilt) 1402 with the right hand 6 and the left hand 8 in the same manner as holding a rod.

The grip 1402 includes a right-hand holding section 1404 held by a right-handed player with the right hand 6, and a left-hand holding section 1406 held with the left hand 8, and depressions 1408 depressed toward the grip axis are provided in the upper surface of the grip at positions reached by the thumbs of the right hand 6 and the left hand 8 when the player holds the holding sections with the right hand 6 and the left hand 8. A main lever 1250 is disposed in the depression 1408 in the right-hand holding section 1404, and a sublever 1252 is disposed in the depression 1408 in the left-hand holding section 1406.

The main lever 1250 according to this embodiment is disposed at the center with respect to the direction of a point 1401 of the sword, or displaced toward the side (left) on which the thumb is placed when the player holds the sword-type game controller 1400 with the right hand 6. The upward/downward input direction of the main lever 1250 (corresponding the forward/backward direction of the sword) may coincide with the forward/backward direction toward the point of the sword, or may be inclined to the left to some extent along the bending/stretching direction of the thumb of the right hand. When the main lever 1250 is displaced to the left or the upward/downward input direction of the main lever 1250 is inclined to the left, the player can perform a smoother and more intuitive operation in the same manner as in the first embodiment when the player holds the right-hand holding section 1404 with the right hand.

The sublever 1252 according to this embodiment is disposed at the center with respect to the direction of a point 1401 of the sword, or displaced toward the side (right) on which the thumb is placed when the player holds the sword-type game controller 1400 with the left hand 8. The upward/downward input direction of the sublever 1252 (corresponding to the forward/backward direction of the sword) may coincide with the forward/backward direction toward the point of the sword, or may be inclined to the right to some extent along the bending/stretching direction of the thumb of the left hand. When the sublever 1252 is displaced to the right or the upward/downward input direction of the sublever 1252 is inclined to the right, the player can perform a smoother and more intuitive operation in the same manner as in the first embodiment when the player holds the left-hand holding section 1406 with the left hand.

Depressions 1410 corresponding to the third depression 1238b according to the first embodiment are provided in the bottom surface of the grip 1402. An operation button 1254J corresponding to the rear operation button 1254 according to the first embodiment is provided in the depression 1410 in the right-hand holding section 1404, and an operation button 1258G corresponding to the front operation button 1258 according to the first embodiment is provided in the depression 1410 in the left-hand holding section 1406. The end faces of the operation button 1254G and the operation button 1258J in an unoperated state are accommodated in the depression 1410 and do not protrude from the bottom surface of the grip 1402 in the same manner as in the first embodiment.

According to this embodiment, the player can naturally input the moving direction and the view point direction of the player's character while enjoying the game as if the player were holding and swinging an actual sword. Moreover, effects similar to those of the gun-type controller 1230 according to the first embodiment can be achieved, even if the appearance of the input controller and the game applied differ.

### <Tenth embodiment>

A cradle 1500 for the gun-type controller 1230 is described below. The same elements as in the first embodiment are indicated by the same symbols. Description of these elements is omitted.

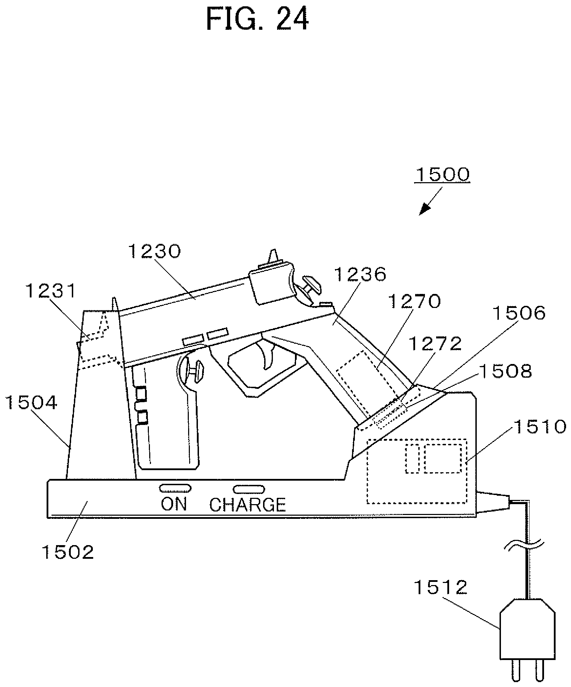

FIG. 24 is an external left side view showing an example of the configuration of the cradle 1500. As shown in FIG. 24, the cradle 1500 is a charging station to and from which the gun-type controller 1230 can be attached and detached. The cradle 1500 includes a first support section 1504 which supports the muzzle 1231 of the gun-type controller 1230 and a second support section 1506 into which the main grip 1236 is fitted, the first support section 1504 and the second support section 1506 being provided on the upper surface of a base 1502.

The second support section 1506 is in the shape of a cup, for example. The second support section 1506 accommodates the lower end of the main grip 1236 to limit the movement in the horizontal direction (right/left direction and forward/backward direction in FIG. 24). A contactless power supply terminal 1508 which supplies power to a contactless power receiving terminal 1272 is provided at the bottom of the second support section 1506. The contactless power supply terminal 1508 is provided with power obtained from a charging circuit section 1510 by connecting a plug 1510 to a domestic power supply.

Therefore, when inserting the main grip 1236 into the second support section 1506 while supporting the muzzle 1231 of the gun-type controller 1230 on the first support section 1504, the contactless power receiving terminal 1272 of the gun-type controller 1230 is positioned close to the contactless power supply terminal 1508 so that power is supplied due to an electromagnetic induction effect. Therefore, when installing the gun-type controller 1230 in the cradle 1500 when the gun-type controller 1230 is not used, a built-in battery 1270 is automatically charged.

The cradle 1500 according to this embodiment may also be applied to the gun-type controllers 1230 according to the second to eighth embodiments in the same manner a the gun-type controller according to the first embodiment.

### <Modification>

The first to first embodiments according to the invention have been described above. Note that the application of the invention is not limited to these embodiments. Various modifications and variations may be made without departing from the spirit and scope of the invention.

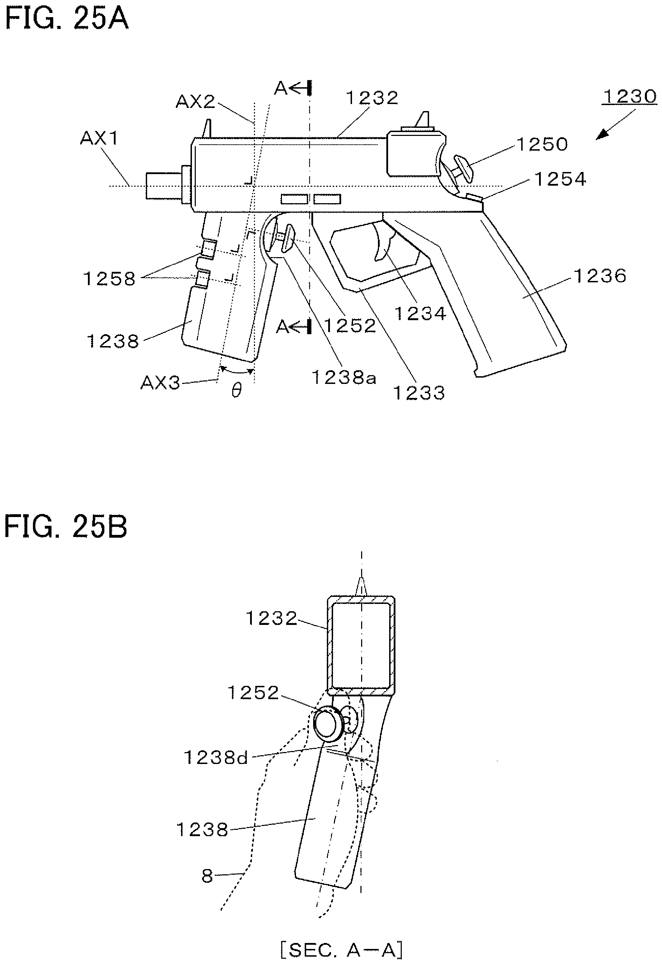

In the first embodiment, the subgrip 1238 extends perpendicularly downward from the barrel 1232, for example. Note that the invention is not limited thereto. As shown in FIG. 25, the subgrip 1238 may extend diagonally downward toward the front. In the above embodiment, the stick of the sublever 1252 is provided to face in the barrel direction. Note that the invention is not limited thereto. As shown in FIG. 25, the sublever 1252 may be provided on an end face 1238d which faces the left hand 8 holding the subgrip 1238 so that the stick faces the hand, for example. Specifically, the sublever 1252 may extend diagonally backward with respect to the barrel axial direction.

The game controller to which the invention is applied can also be used for a known gun shooting game in the same manner as the FPS game.

The above embodiment illustrates an example in which the game controller to which the invention is applied is used for a consumer game device. Note that the invention is not limited thereto. The game controller to which the invention is applied may be used in a state in which the game controller is connected with another video game device (e.g. business game device or personal computer).

## Claims

1. A game controller (1230) that has a specific shape held with both hands during use, the game controller (1230) comprising:
a front-side holding section (1238) and a rear-side holding section (1236) respectively provided on a front side and a rear side of the game controller (1230), the front-side holding section (1238) being held with a right or left hand and the rear-side holding section (1236) being held with the other hand;
a front-side direction input section (1252) that is provided within a range in which the thumb of the hand holding the front-side holding section (1238) reaches the front-side direction input section, and is operated with the thumb of the hand holding the front-side holding section (1238) in a vertical direction and a horizontal direction; **characterised in** a rear-side direction input section (1250) that is provided within a range in which the thumb of the hand holding the rear-side holding section (1236) reaches the rear-side direction input section (1250), and is operated with the thumb of the hand holding the rear-side holding section (1236) in a vertical direction and a horizontal direction; and
an operation signal output section that outputs an operation input signal corresponding to an input to each of the front-side direction input section (1252) and the rear-side direction input section (1250).

2. The game controller as defined in claim 1,
the game controller (1230) functioning as a pointer that is aimed at a display (1222);
the front-side direction input section (1252) being positioned so that the front-side direction input section (1252) can be operated with the thumb of the hand holding the front-side holding section (1238) the rear-side direction input section (1250) being positioned so that the rear-side direction input section can be operated with the thumb of the hand holding the rear-side holding section (1236); and
a direction indicated by the pointer being aligned with a forward / backward direction when a player holds the game controller (1230) with both hands to operate the front-side direction input section (1252) and the rear-side direction input section (1250) with the thumbs.

3. The game controller as defined in claim 2, wherein an upward/downward operation direction of the front-side direction input section (1252) is defined as a bending/stretching direction of the thumb when holding the front-side holding section (1238).

4. The game controller as defined in any one of claims 1 to 3, comprising a push button (1258) provided within a range in which the forefinger of the hand holding the front-side holding section (1238) reaches the push button (1258).

5. The game controller as defined in claim 4,
wherein a depression (1238a) which is depressed as compared with an end face is provided in the front-side holding section (1238) at an arrangement position of the push button (1258); and
wherein the push button (1258) is disposed in the depression (1238a).

6. The game controller as defined in any one of claims 1 to 5, wherein the front-side direction input section (1252) is an operation input section which includes a tiltable stick or a slidable pad and of which an operation direction and an amount of operation is variably input, and is disposed at a position close to the hand holding the front-side holding section (1238) with respect to a center of a main body in a right/left direction.

7. The game controller as defined in any one of claims 1 to 5, wherein the front-side direction input section (1252) is an operation input section which includes a tiltable stick or a slidable pad and of which an operation direction and an amount of operation is variably input, and is freely disposed at a position close to the left or right with respect to a center of a main body in a right/left direction.

8. The game controller as defined in any one of claims 1 to 5, wherein the front-side direction input section includes a tiltable stick which is maintained at a specific neutral position in a non-input state, the stick being tilted toward the hand holding the front-side holding section (1238) at the neutral position.

9. The game controller as defined in claim 6 or 8, wherein the front-side direction input section (1252) can be detached from the front-side holding section (1238) and attached to the front-side holding section (1238) in a right/left reversed state.

10. The game controller as defined in 9, comprising:
a detection section which detects a right/left reversed installation state of the front-side direction input section (1252);
wherein the operation signal output section corrects signals of the front-side direction input section (1252) in upward, downward, right, and left directions according to the detection result of the detection section and outputs the corrected signals.

11. The game controller as defined in any one of claims 1 to 10,
the game controller (1230) having a firearm shape and further comprising:
a barrel equivalent portion (1232); and
a firing trigger (1234) provided within a range in which the forefinger of the hand holding the rear-side holding section (1236) reaches the firing trigger (1234).

12. The game controller as defined in claim 11, comprising:
a trigger guard (1233) for the firing trigger (1234);
wherein the front-side direction input section (1252) includes a tiltable stick provided between the front-side holding section (1238) and the trigger guard (1233); and
wherein a space into which a thumb can be inserted is provided between an operation surface of the stick and the trigger guard (1233).

13. The game controller as defined in claim 11 or 12,
wherein the front-side holding section (1238) is provided so that a longitudinal direction of the front-side holding section (1238) faces diagonally forward; and
wherein the front-side holding section (1238) includes a push button provided at a position of the forefinger holding the front-side holding section (1238) so that a depressing direction coincides with a bending direction of the forefinger in a state in which the forefinger holds the front-side holding section (1238).

14. The game controller as defined in any one of claims 11 to 13, comprising a variable mechanism section by which an arrangement position of the front-side holding section (1238) with respect to the barrel equivalent portion (1232) is changeable.

15. The game controller as defined in claim 14,
wherein the variable mechanism section includes:
a swing shaft provided in the barrel equivalent portion (1232);
a swing shaft insertion hole which is provided in the front-side holding section (1238) and into which the swing shaft is inserted; and
a securing section which secures the position of the front-side holding section (1238) around the swing shaft.

16. The game controller as defined in claim 14,
wherein the variable mechanism section includes:
a ball head section (1332) provided in one of the front-side holding section (1238) and the barrel equivalent portion (1232); and
a ball holding section which holds and secures the ball head section and is provided in the other of the front-side holding section (1238) and the barrel equivalent portion (1232).

17. The game controller as defined in claim 14, wherein the variable mechanism section includes connection sections which are provided on a peripheral surface of the barrel equivalent portion (1232) and to which the front-side holding section (1238) can be connected, and the front-side holding section (1238) is connected to one of the connection sections.

18. The game controller as defined in any one of claims 11 to 14, wherein the front-side holding section (1238) is provided at a position at which a longitudinal direction of the front-side holding section (1238) does not intersect the barrel equivalent portion (1232) and is displaced from a barrel direction.

19. The game controller as defined in claim 18,
wherein the rear-side holding section (1236) is provided downward from a bottom of the barrel equivalent portion (1232); and
wherein the front-side holding section (1238) is provided downward from a left side or a right side of the barrel equivalent portion (1232).

20. The game controller as defined in claim 19, wherein the front-side direction input section (1252) is provided on an upper surface of the front-side holding section (1238).

21. The game controller as defined in any one of claims 11 to 20, wherein the front-side holding section (1238) includes a vibrator.

22. The game controller as defined in any one of claims 1 to 21, comprising:
a built-in battery; and
a contactless power receiving section which receives power from outside for charging the built-in battery;
wherein the operation signal output section outputs the operation input signal using a wireless communication section driven by the built-in battery.

## Patentansprüche

1. Spielecontroller (1230), der eine spezifische Form, die mit beiden Händen während der Verwendung gehalten wird, aufweist, wobei der Spielecontroller (1230) Folgendes umfasst:
einen vorderseitigen Halteabschnitt (1238) und einen rückseitigen Halteabschnitt (1236), die auf einer Vorderseite beziehungsweise einer Rückseite des Spielecontrollers (1230) bereitgestellt sind, wobei der vorderseitige Halteabschnitt (1238) mit einer rechten oder einer linken Hand und der rückseitige Halteabschnitt (1236) mit der anderen Hand gehalten wird;
einen vorderseitigen Richtungseingabeabschnitt (1252), der innerhalb eines Bereichs bereitgestellt ist, in dem der Daumen der Hand, die den vorderseitigen Halteabschnitt (1238) hält, den vorderseitigen Richtungseingabeabschnitt erreicht, und mit dem Daumen der Hand, die den vorderseitigen Halteabschnitt (1238) hält, in einer senkrechten Richtung und einer waagerechten Richtung bedient wird; **dadurch gekennzeichnet, dass**
ein rückseitiger Richtungseingabeabschnitt (1250), der innerhalb eines Bereichs bereitgestellt ist, in dem der Daumen der Hand, die den rückseitigen Halteabschnitt (1236) hält, den rückseitigen Richtungseingabeabschnitt (1250) erreicht, und mit dem Daumen der Hand, die den rückseitigen Halteabschnitt (1236) hält, in einer senkrechten Richtung und einer waagerechten Richtung bedient wird; und
ein Bedienungssignalausgabeabschnitt, der ein Bedienungseingabesignal entsprechend einer Eingabe an jeweils den vorderseitigen Richtungseingabeabschnitt (1252) und den rückseitigen Richtungseingabeabschnitt (1250) ausgibt.

2. Spielecontroller nach Anspruch 1,
wobei der Spielecontroller (1230) als ein Zeiger funktioniert, der auf einen Bildschirm (1222) gerichtet wird;
wobei der vorderseitige Richtungseingabeabschnitt (1252) derart angeordnet ist, dass der vorderseitige Richtungseingabeabschnitt (1252) mit dem Daumen der Hand, die den vorderseitigen Halteabschnitt (1238) hält, bedient werden kann, wobei der rückseitige Richtungseingabeabschnitt (1250) derart angeordnet ist, dass der rückseitige Richtungseingabeabschnitt mit dem Daumen der Hand, die den rückseitigen Halteabschnitt (1236) hält, bedient werden kann; und
eine Richtung, die durch den Zeiger angezeigt wird, an einer Vorwärts-/Rückwärtsrichtung ausgerichtet wird, wenn ein Spieler den Spielecontroller (1230) mit beiden Händen hält, um den vorderseitigen Richtungseingabeabschnitt (1252) und den rückseitigen Richtungseingabeabschnitt (1250) mit den Daumen zu bedienen.

3. Spielecontroller nach Anspruch 2, wobei eine Aufwärts-/Abwärtsbedienungsrichtung des vorderseitigen Richtungseingabeabschnitts (1252) als eine Beug-/Streckrichtung des Daumens definiert wird, wenn der vorderseitige Halteabschnitt (1238) gehalten wird.

4. Spielecontroller nach einem der Ansprüche 1 bis 3, einen Druckknopf (1258) umfassend, der innerhalb eines Bereichs bereitgestellt ist, in dem der Zeigefinger der Hand, die den vorderseitigen Halteabschnitt (1238) hält, den Druckknopf (1258) erreicht.

5. Spielecontroller nach Anspruch 4,
wobei eine Vertiefung (1238a), die im Vergleich mit einer Endfläche vertieft ist, auf dem vorderseitigen Halteabschnitt (1238) an einer Anordnungslage des Druckknopfs (1258) bereitgestellt ist; und
wobei der Druckknopf (1258) in der Vertiefung (1238a) angeordnet ist.

6. Spielecontroller nach einem der Ansprüche 1 bis 5, wobei der vorderseitige Richtungseingabeabschnitt (1252) ein Bedienungseingabeabschnitt ist, der einen neigbaren Knüppel oder ein gleitbares Pad enthält und über den eine Bedienungsrichtung und eine Menge von Bedienungen variierend eingegeben werden, und der an einer Lage nah an der Hand, die den vorderseitigen Halteabschnitt (1238) hält, in Bezug auf eine Mitte eines Hauptkörpers in einer Rechts-/Linksrichtung angeordnet ist.

7. Spielecontroller nach einem der Ansprüche 1 bis 5, wobei der vorderseitige Richtungseingabeabschnitt (1252) ein Bedienungseingabeabschnitt ist, der einen neigbaren Knüppel oder ein gleitbares Pad enthält und über den eine Bedienungsrichtung und eine Menge von Bedienungen variierend eingegeben werden, und der frei an einer Lage nahe von links oder rechts mit Bezug auf eine Mitte eines Hauptkörpers in einer Rechts-/Linksrichtung angeordnet ist.

8. Spielecontroller nach einem der Ansprüche 1 bis 5, wobei der vorderseitige Richtungseingabeabschnitt einen neigbaren Knüppel enthält, der in einem Nicht-Eingabe-Zustand in einer spezifischen neutralen Lage behalten wird, wobei der Knüppel in der neutralen Lage zu der Hand, die den vorderseitigen Halteabschnitt (1238) hält, geneigt ist.

9. Spielecontroller nach Anspruch 6 oder 8, wobei der vorderseitige Richtungseingabeabschnitt (1252) von dem vorderseitigen Halteabschnitt (1238) entfernt werden kann und an den vorderseitigen Halteabschnitt (1238) in einem umgekehrten Rechts-/Linkszustand angebracht werden kann.

10. Spielecontroller nach Anspruch 9, Folgendes umfassend:
einen Erfassungsabschnitt, der einen umgekehrten Rechts-/Linksinstallationszustand des vorderseitigen Richtungseingabeabschnitts (1252) erfasst;
wobei der Bedienungssignalausgabeabschnitt Signale des vorderseitigen Richtungseingabeabschnitts (1252) in Aufwärts-/Abwärts-/Rechts- und Linksrichtungen gemäß des Erfassungsergebnisses des Erfassungsabschnitts korrigiert und die korrigierten Signale ausgibt.

11. Spielecontroller nach einem der Ansprüche 1 bis 10,
wobei der Spielecontroller (1230) eine Schusswaffenform aufweist und ferner Folgendes umfasst:
einen Laufentsprechungsabschnitt (1232); und
einen Druckpunktabzug (1234), bereitgestellt innerhalb eines Bereichs, in dem der Zeigefinger der Hand, die den rückseitigen Halteabschnitt (1236) hält, den Druckpunktabzug (1234) erreicht.

12. Spielecontroller nach Anspruch 11, Folgendes umfassend:
einen Abzugsbügel (1233) für den Druckpunktabzug (1234);
wobei der vorderseitige Richtungseingabeabschnitt (1252) einen neigbaren Knüppel, bereitgestellt zwischen dem vorderseitigen Halteabschnitt (1238) und dem Abzugsbügel (1233), enthält; und
wobei ein Raum, in den ein Daumen eingeführt werden kann, zwischen einer Bedienungsoberfläche des Knüppels und dem Abzugsbügel (1233) bereitgestellt wird.

13. Spielecontroller nach Anspruch 11 oder 12,
wobei der vorderseitige Halteabschnitt (1238) derart bereitgestellt wird, dass eine Längsrichtung des vorderseitigen Halteabschnitts (1238) diagonal nach vorne weist; und
wobei der vorderseitige Halteabschnitt (1238) einen Druckknopf enthält, bereitgestellt an einer Position des Zeigefingers, der den vorderseitigen Halteabschnitt (1238) hält, sodass eine Vertiefungsrichtung mit einer Biegerichtung des Zeigefingers in einem Zustand, in dem der Zeigefinger den vorderseitigen Halteabschnitt (1238) hält, zusammenfällt.

14. Spielecontroller nach einem der Ansprüche 11 bis 13, einen variablen Mechanismusabschnitt umfassend, durch den eine Anordnungsposition des vorderseitigen Halteabschnitts (1238) mit Bezug auf den Laufentsprechungsabschnitt (1232) veränderbar ist.

15. Spielecontroller nach Anspruch 14,
wobei der variable Mechanismusabschnitt Folgendes enthält:
einen Schwingschaft, bereitgestellt in dem Laufentsprechungsabschnitt (1232);
ein Schwingschafteinführungsloch, das in dem vorderseitigen Halteabschnitt (1238) bereitgestellt ist und durch das der Schwingschaft eingeführt wird; und
einen Sicherungsabschnitt, der die Position des vorderseitigen Halteabschnitts (1238) um den Schwingschaft herum sichert.

16. Spielecontroller nach Anspruch 14, wobei der variable Mechanismusabschnitt Folgendes enthält:
einen Kugelkopfabschnitt (1332), bereitgestellt in einem des vorderseitigen Halteabschnitts (1238) und des Laufentsprechungsabschnitts (1232); und
einen Kugelhalteabschnitt, der den Kugelkopfabschnitt hält und sichert und in dem anderen des vorderseitigen Abschnitts (1238) und des Laufentsprechungsabschnitts (1232) bereitgestellt ist.

17. Spielecontroller nach Anspruch 14, wobei der variable Mechanismusabschnitt Verbindungsabschnitte enthält, die auf einer Randoberfläche des Laufentsprechungsabschnitts (1232) bereitgestellt sind und mit denen der vorderseitige Halteabschnitt (1238) verbunden werden kann, und der vorderseitige Halteabschnitt (1238) mit einer oder mehreren Verbindungsabschnitten verbunden ist.

18. Spielecontroller nach einem der Ansprüche 11 bis 14, wobei der vorderseitige Halteabschnitt (1238) an einer Position bereitgestellt ist, an der eine Längsrichtung des vorderseitigen Halteabschnitts (1238) den Laufentsprechungsabschnitt (1232) nicht schneidet und von einer Laufrichtung verlagert ist.

19. Spielecontroller nach Anspruch 18,
wobei der rückseitige Halteabschnitt (1236) von einem Boden des Laufentsprechungsabschnitts (1232) abwärts bereitgestellt ist; und
wobei der vorderseitige Halteabschnitt (1238) abwärts von einer linken oder einer rechten Seite des Laufentsprechungsabschnitts (1232) bereitgestellt ist.

20. Spielecontroller nach Anspruch 19, wobei der vorderseitige Richtungseingabeabschnitt (1252) auf einer oberen Oberfläche des vorderseitigen Halteabschnitts (1238) bereitgestellt ist.

21. Spielecontroller nach einem der Ansprüche 11 bis 20, wobei der vorderseitige Halteabschnitt (1238) einen Schwingungserzeuger enthält.

22. Spielecontroller nach einem der Ansprüche 1 bis 21, Folgendes umfassend:
eine eingebaute Batterie; und
einen kontaktlosen Stromempfangsabschnitt, der von außen Strom zum Laden der eingebauten Batterie empfängt;
wobei der Bedienungsausgabeabschnitt das Bedienungseingabesignal unter Verwendung eines Drahtloskommunikationsabschnitts, angetrieben durch die eingebaute Batterie, ausgibt.

## Revendications

1. Dispositif de commande de jeu (1230) qui a une forme spécifique tenu avec les deux mains en utilisation, le dispositif de commande de jeu (1230) comprenant :
une section de tenue côté avant (1238) et une section de tenue côté arrière (1236) prévues respectivement sur un côté avant et un côté arrière du dispositif de commande de jeu (1230), la section de tenue côté avant (1238) étant tenue avec une main droite ou gauche et la section de tenue côté arrière (1236) étant tenue avec l'autre main ;
une section d'entrée de direction côté avant (1252) qui est prévue dans une plage dans laquelle le pouce de la main tenant la section de tenue côté avant (1238) atteint la section d'entrée de direction côté avant, et est actionnée avec le pouce de la main tenant la section de tenue côté avant (1238) dans une direction verticale et une direction horizontale ;
**caractérisé en ce que**
une section d'entrée de direction côté arrière (1250) qui est prévue dans une plage dans laquelle le pouce de la main tenant la section de tenue côté arrière (1236) atteint la section d'entrée de direction côté arrière (1250), et est actionnée avec le pouce de la main tenant la section de tenue côté arrière (1236) dans une direction verticale et une direction horizontale ; et
une section de sortie de signal de fonctionnement qui fournit en sortie un signal d'entrée de fonctionnement correspondant à une entrée de chacune de la section d'entrée de direction côté avant (1252) et de la section d'entrée de direction côté arrière (1250).

2. Dispositif de commande de jeu selon la revendication 1,
le dispositif de commande de jeu (1230) fonctionnant comme un pointeur qui est dirigé vers un afficheur (1222) ;
la section d'entrée de direction côté avant (1252) étant positionnée de sorte que la section d'entrée de direction côté avant (1252) puisse être actionnée avec le pouce de la main tenant la section de tenue côté avant (1238), la section d'entrée de direction côté arrière (1250) étant positionnée de sorte que la section d'entrée de direction côté arrière puisse être actionnée avec le pouce de la main tenant la section de tenue côté arrière (1236) ; et
une direction indiquée par le pointeur étant alignée avec une direction vers l'avant/l'arrière lorsqu'un joueur tient le dispositif de commande de jeu (1230) avec les deux mains pour actionner la section d'entrée de direction côté avant (1252) et la section d'entrée de direction côté arrière (1250) avec les pouces.

3. Dispositif de commande de jeu selon la revendication 2, dans lequel une direction de fonctionnement vers le haut/bas de la section d'entrée de direction côté avant (1252) est définie en tant que direction de flexion/étirement du pouce lorsqu'il tient la section de tenue côté avant (1238).

4. Dispositif de commande de jeu selon l'une quelconque des revendications 1 à 3, comprenant un bouton poussoir (1258) prévu dans une plage dans laquelle l'index de la main tenant la section de tenue côté avant (1238) atteint le bouton poussoir (1258).

5. Dispositif de commande de jeu selon la revendication 4,
dans lequel un enfoncement (1238a) qui est enfoncé en comparaison à une face d'extrémité est prévu dans la section de tenue côté avant (1238) à une position d'agencement du bouton poussoir (1258) ; et
dans lequel le bouton poussoir (1258) est disposé dans l'enfoncement (1238a).

6. Dispositif de commande de jeu selon l'une quelconque des revendications 1 à 5, dans lequel la section d'entrée de direction côté avant (1252) est une section d'entrée de fonctionnement qui comporte un manche à balai inclinable ou une manette coulissante et dont une direction de fonctionnement et une quantité de fonctionnement sont entrées de façon variable, et est disposée à une position près de la main tenant la section de tenue côté avant (1238) par rapport à un centre d'un corps principal dans une direction droite/gauche.

7. Dispositif de commande de jeu selon l'une quelconque des revendications 1 à 5, dans lequel la section d'entrée de direction côté avant (1252) est une section d'entrée de fonctionnement qui comporte un manche à balai inclinable ou une manette coulissante et dont une direction de fonctionnement et une quantité de fonctionnement sont entrées de façon variable, et est disposée librement à une position près de la gauche ou de la droite par rapport à un centre d'un corps principal dans une direction droite/gauche.

8. Dispositif de commande de jeu selon l'une quelconque des revendications 1 à 5, dans lequel la section d'entrée de direction côté avant comporte un manche à balai inclinable qui est maintenu à une position neutre spécifique dans un état de non-entrée, le manche à balai étant incliné vers la main tenant la section de tenue côté avant (1238) à la position neutre.

9. Dispositif de commande de jeu selon la revendication 6 ou 8, dans lequel la section d'entrée de direction côté avant (1252) peut être détachée de la section de tenue côté avant (1238) et attachée à la section de tenue côté avant (1238) dans un état inversé droite/gauche.

10. Dispositif de commande de jeu selon la revendication 9, comprenant :
une section de détection qui détecte un état d'installation inversée droite/gauche de la section d'entrée de direction côté avant (1252) ;
dans lequel la section de sortie de signal de fonctionnement corrige des signaux de la section d'entrée de direction côté avant (1252) dans des directions vers le haut, vers le bas, droite et gauche selon le résultat de détection de la section de détection et fournit en sortie les signaux corrigés.

11. Dispositif de commande de jeu selon l'une quelconque des revendications 1 à 10,
le dispositif de commande de jeu (1230) ayant la forme d'une arme à feu et comprenant en outre :
une portion équivalente à un canon (1232) ; et
une gâchette de tir (1234) prévue dans une plage dans laquelle l'index de la main tenant la section de tenue côté arrière (1236) atteint la gâchette de tir (1234).

12. Dispositif de commande de jeu selon la revendication 11, comprenant :
un pontet (1233) pour la gâchette de tir (1234) ;
dans lequel la section d'entrée de direction côté avant (1252) comporte un manche à balai inclinable prévu entre la section de tenue côté avant (1238) et le pontet (1233) ; et
dans lequel un espace dans lequel un pouce peut être inséré est prévu entre une surface de fonctionnement de la manette et le pontet (1233).

13. Dispositif de commande de jeu selon la revendication 11 ou 12,
dans lequel la section de tenue côté avant (1238) est prévue de sorte qu'une direction longitudinale de la section de tenue côté avant (1238) soit orientée vers l'avant en diagonale ; et
dans lequel la section de tenue côté avant (1238) comporte un bouton poussoir prévu à une position de l'index tenant la section de tenue côté avant (1238) de sorte qu'une direction d'enfoncement coïncide avec une direction de flexion de l'index dans un état dans lequel l'index tient la section de tenue côté avant (1238).

14. Dispositif de commande de jeu selon l'une quelconque des revendications 11 à 13, comprenant une section de mécanisme variable grâce à laquelle une position d'agencement de la section de tenue côté avant (1238) par rapport à la portion équivalente à un canon (1232) est modifiable.

15. Dispositif de commande de jeu selon la revendication 14,
dans lequel la section de mécanisme variable comporte :
un arbre oscillant prévu dans la portion équivalente à un canon (1232) ;
un trou d'insertion d'arbre oscillant qui est prévu dans la section de tenue côté avant (1238) et dans lequel l'arbre oscillant est inséré ; et
une section d'arrimage qui arrime la position de la section de tenue côté avant (1238) autour de l'arbre oscillant.

16. Dispositif de commande de jeu selon la revendication 14,
dans lequel la section de mécanisme variable comporte :
une section de tête de bille (1332) prévue dans l'une de la section de tenue côté avant (1238) et de la portion équivalente à un canon (1232) ; et
une section de tenue de bille qui tient et arrime la section de tête de bille et est prévue dans l'autre de la section de tenue côté avant (1238) et de la portion équivalente à un canon (1232).

17. Dispositif de commande de jeu selon la revendication 14, dans lequel la section de mécanisme variable comporte des sections de raccordement qui sont prévues sur une surface périphérique de la portion équivalente à un canon (1232) et auxquelles la section de tenue côté avant (1238) peut être raccordée, et la section de tenue côté avant (1238) est raccordée à l'une des sections de raccordement.

18. Dispositif de commande de jeu selon l'une quelconque des revendications 11 à 14, dans lequel la section de tenue côté avant (1238) est prévue à une position à laquelle une direction longitudinale de la section de tenue côté avant (1238) ne coupe pas la portion équivalente à un canon (1232) et est déplacée depuis une direction de canon.

19. Dispositif de commande de jeu selon la revendication 18,
dans lequel la section de tenue côté arrière (1236) est prévue vers le bas depuis une partie basse de la portion équivalente à un canon (1232) ; et
dans lequel la section de tenue côté avant (1238) est prévue vers le bas depuis un côté gauche ou un côté droit de la portion équivalente à un canon (1232).

20. Dispositif de commande de jeu selon la revendication 19, dans lequel la section d'entrée de direction côté avant (1252) est prévue sur une surface supérieure de la section de tenue côté avant (1238).

21. Dispositif de commande de jeu selon l'une quelconque des revendications 11 à 20, dans lequel la section de tenue côté avant (1238) comporte un vibreur.

22. Dispositif de commande de jeu selon l'une quelconque des revendications 1 à 21, comprenant :
une batterie intégrée ; et
une section de réception d'alimentation sans contact qui reçoit l'alimentation depuis l'extérieur pour charger la batterie intégrée ;
dans lequel la section de sortie de signal de fonctionnement fournit en sortie le signal d'entrée de fonctionnement à l'aide d'une section de communication sans fil pilotée par la batterie intégrée.
